# EUROPEAN PATENT APPLICATION

(11) **EP 4 822 607 A1**
(43) Date of publication of application: **14.10.2026**
(21) Application number: 25846606.9
(22) Date of filing: 12.06.2025
(51) Int. Cl.: G06N 5/04, G06N 20/00

(54) **TASK PROCESSING METHOD AND APPARATUS, DEVICE, AND STORAGE MEDIUM**

(30) Priority: 01.08.2024 CN 202411052385
(71) Applicant: Ruijie Networks Co., Ltd., Fuzhou, Fujian 350002 (CN)
(72) Inventor: HUANG, Tinghong, Fuzhou, Fujian 350002 (CN); CHEN, Wenke, Fuzhou, Fujian 350002 (CN); TANG, Zhengjun, Fuzhou, Fujian 350002 (CN)
(74) Representative: Boult Wade Tennant LLP
(86) International application number: PCT/CN2025/100778
(87) International publication number: WO 2026/026259

(57) **Abstract**

The present application provides a task processing method, a task processing apparatus, and a task processing device, and relates to the field of natural language processing technology. The method includes: receiving an input to-be-processed task; determining, based on the to-be-processed task and tool description information, an initial plan for processing the to-be-processed task, where the initial plan includes an initial step for processing the to-be-processed task and tools required for the initial plan; executing the initial plan based on the initial step and the tools required for the initial plan to obtain an execution result corresponding to the initial plan; and determining response information for the to-be-processed task based on the execution result corresponding to the initial plan.

## Description

### CROSS-REFERENCE TO RELATED APPLICATIONS

The present application claims priority to Chinese Patent Application No. 202411052385.6, filed with the China National Intellectual Property Administration on August 1, 2024, and entitled "TASK PROCESSING METHOD, APPARATUS, AND DEVICE", which is incorporated herein by reference in its entirety.

### TECHNICAL FIELD

The present application relates to the field of natural language processing technology, and in particular to a task processing method, a task processing apparatus, a task processing device, and a storage medium.

### BACKGROUND

With the rapid development of information technology, the demand for customer service continues to increase. To meet the needs for efficient and convenient services, intelligent customer service technology has emerged.

Intelligent customer service technology may be applied to intelligent customer service robots for responding to questions raised by users. Currently, for a question raised by a user, intelligent customer service robots may process the question using a rule engine and machine learning algorithms, parse the question raised by the user through preset rules and data training models, and output an answer.

### SUMMARY

Embodiments of the present application provide a task processing method, a task processing apparatus, a task processing device, and a storage medium.

According to a first aspect, embodiments of the present application provide a task processing method, including:
receiving an input to-be-processed task;
determining, based on the to-be-processed task and tool description information, an initial plan for processing the to-be-processed task, where the initial plan includes an initial step for processing the to-be-processed task and tools required for the initial plan;
executing the initial plan based on the initial step and the tools required for the initial plan to obtain an execution result corresponding to the initial plan; and
determining response information for the to-be-processed task based on the execution result corresponding to the initial plan.

Through the above steps, the solution according to the embodiments of the present application may determine the tools required for the initial plan based on the to-be-processed task and the tool description information, flexibly invoke system tools to execute the initial plan, and obtain the response information for the to-be-processed task, thereby implementing processing of the to-be-processed task input by the user, and solving the problem that currently only questions raised by users can be answered, but task processing cannot be performed.

In a possible implementation, the determining, based on the to-be-processed task and tool description information, the initial plan for processing the to-be-processed task includes:
generating a first candidate plan set based on the to-be-processed task and the tool description information, where the first candidate plan set includes one or more candidate plans;
determining scores for the one or more candidate plans in the first candidate plan set based on candidate plan evaluation parameters; and
determining the initial plan based on the scores of the one or more candidate plans in the first candidate plan set.

In a possible implementation, the determining, based on the to-be-processed task and tool description information, the initial plan for processing the to-be-processed task includes:
parsing the to-be-processed task to determine initial steps required for processing the to-be-processed task; and
determining tools required for executing the initial step based on the tool description information.

Through the above steps, at least one candidate plan in the first candidate plan set is generated, and the initial plan in the first candidate plan set is determined based on the scores of the respective candidate plans, thereby enabling preferential execution of candidate plans with higher scores and improving the efficiency and quality of response information generation.

In a possible implementation, the determining response information for the to-be-processed task based on the execution result corresponding to the initial plan includes:
determining, based on the execution result corresponding to the initial plan, whether the to-be-processed task has been completed;
when the to-be-processed task is determined to have been completed, determining first response information based on the to-be-processed task and the execution result corresponding to the initial plan; and
when the to-be-processed task is determined not to have been completed, determining second response information based on the to-be-processed task, the tool description information, and the execution result corresponding to the initial plan.

The completion rate of the to-be-processed task can be improved by determining whether the to-be-processed task has been completed, and by determining the response information for the to-be-processed task based on the determination result, thereby avoiding outputting, as the response information, the execution result corresponding to the initial plan when the to-be-processed task is not completed.

In a possible implementation, the determining the second response information based on the to-be-processed task, the tool description information, and the execution result corresponding to the initial plan includes:
executing a first operation, where the first operation is configured to: determine an (i+1)-th plan for processing the to-be-processed task based on the to-be-processed task, the tool description information, and execution results corresponding to respective ones of the first i plans; and execute the (i+1)-th plan to obtain an execution result corresponding to the (i+1)-th plan; where i is initially 1, and i is a positive integer greater than or equal to 1;
when the to-be-processed task is determined not to have been completed based on execution results corresponding to respective ones of the first i+1 plans, updating i to i+1, and repeating execution of the first operation; and
when the to-be-processed task is determined to have been completed based on the execution results corresponding to respective ones of the first i+1 plans, determining the second response information based on the execution results corresponding to respective ones of the first i+1 plans.

The completion rate of the to-be-processed task can be improved by determining whether the to-be-processed task has been completed, and by determining the response information for the to-be-processed task based on the determination result, thereby avoiding outputting, as the response information, the execution results corresponding to respective ones of the first i plans when the to-be-processed task is not completed.

In a possible implementation, the determining the (i+1)-th plan for processing the to-be-processed task based on the to-be-processed task, the tool description information, and the execution results corresponding to respective ones of the first i plans includes:
generating an (i+1)-th candidate plan set based on the to-be-processed task, the tool description information, and the execution results corresponding to respective ones of the first i plans, where the (i+1)-th candidate plan set includes one or more candidate plans;
determining scores for the one or more candidate plans in the (i+1)-th candidate plan set based on candidate plan evaluation parameters; and
determining the (i+1)-th plan in the (i+1)-th candidate plan set based on the scores of the one or more candidate plans in the (i+1)-th candidate plan set.

Through the above steps, when the to-be-processed task has not been completed, an (i+1)-th candidate plan set is generated based on the first i plans, and the (i+1)-th plan is selected from the (i+1)-th candidate plan set based on the scores of the respective candidate plans, thereby enabling preferential execution of candidate plans with higher scores and improving the efficiency and quality of response information generation.

In a possible implementation, the executing the (i+1)-th plan to obtain an execution result corresponding to the (i+1)-th plan includes:
determining, based on the (i+1)-th plan, the tool description information, the to-be-processed task, and the execution results corresponding to respective ones of the first i plans, a target tool for executing the (i+1)-th plan and input parameters of the target tool; and
executing the (i+1)-th plan based on the target tool and the input parameters of the target tool to obtain the execution result corresponding to the (i+1)-th plan.

Through the above steps, an appropriate target tool and input parameters of the target tool can be selected for the (i+1)-th plan, thereby effectively executing the (i+1)-th plan.

In a possible implementation, the determining the second response information based on the execution results corresponding to respective ones of the first i+1 plans includes:
executing a second operation, where the second operation is configured to determine, based on the to-be-processed task and an execution result corresponding to a target plan, whether the target plan meets quality requirements, where the target plan initially includes the first i+1 plans, and the execution result corresponding to the target plan initially includes the execution results corresponding to respective ones of the first i+1 plans; and
when the target plan meets the quality requirements, determining the second response information based on the execution result corresponding to the target plan.

Through the above steps, quality evaluation is performed on the target plan, and when the target plan meets the quality requirements, the second response information is output, thereby improving the quality of the response information.

In a possible implementation, the method further includes:
when the target plan does not meet the quality requirements, updating the target plan to obtain an updated target plan; and
repeating execution of the second operation based on the execution result corresponding to the updated target plan.

Through the above steps, quality evaluation is performed on the target plan, and when the target plan does not meet the quality requirements, the target plan is updated, thereby avoiding outputting, as the response information, execution results not meeting the quality requirements and improving the quality of the response information.

In a possible implementation, the updating the target plan to obtain the updated target plan includes:
determining a candidate plan set corresponding to a j-th plan in candidate plan sets corresponding to the first i+1 plans, where j is a positive integer less than or equal to i+1;
when the candidate plan set corresponding to the j-th plan includes unexecuted candidate plans, determining a target candidate plan in the unexecuted candidate plans based on scores of the unexecuted candidate plans; and
updating the target plan based on the target candidate plan to obtain the updated target plan.

When the target plan does not meet the quality requirements, the target plan is updated, and appropriate candidate plans are continuously selected from a candidate plan set for execution, thereby increasing the probability of successfully processing the to-be-processed task and improving the processing stability of the to-be-processed task.

In a possible implementation, the determining, based on the to-be-processed task and tool description information, the initial plan for processing the to-be-processed task includes:
generating a candidate node set of a first level in a tree of thought through tree-of-thought technology and based on the to-be-processed task and the tool description information, where each candidate node in the candidate node set of the first level corresponds to a candidate plan;
determining scores for the candidate nodes in the candidate node set of the first level based on candidate plan evaluation parameters; and
determining a target node at the first level in the candidate node set of the first level based on the scores of the candidate nodes in the candidate node set of the first level, and determining the candidate plan corresponding to the target node at the first level as the initial plan.

At least one candidate node in the candidate node set of the first level is generated through the tree-of-thought technology, a target node at the first level in the candidate node set of the first level is determined based on the scores of the candidate nodes, and a candidate plan corresponding to the target node at the first level is determined as the initial plan, thereby enabling preferential execution of candidate plans corresponding to candidate nodes with higher scores and improving the efficiency and quality of response information generation.

In a possible implementation, the determining the response information for the to-be-processed task based on the execution result corresponding to the initial plan includes:
determining, through tool agent technology and based on the execution result corresponding to the initial plan, whether the to-be-processed task has been completed;
when the to-be-processed task is determined to have been completed, determining first response information through determination technology and based on the to-be-processed task and the execution result corresponding to the initial plan; and
when the to-be-processed task is determined not to have been completed, determining second response information through tree-of-thought technology and the tool agent technology and based on the to-be-processed task, the tool description information, and the execution result corresponding to the initial plan.

The completion rate of the to-be-processed task can be improved by determining, through the tool agent technology, whether the to-be-processed task has been completed, and by determining the response information for the to-be-processed task based on the determination result, thereby avoiding outputting, as the response information, the execution result corresponding to the initial plan when the to-be-processed task is not completed.

In a possible implementation, the determining the second response information through the tree-of-thought technology and the tool agent technology and based on the to-be-processed task, the tool description information, and the execution result corresponding to the initial plan includes:
executing a third operation, where the third operation is configured to: determine an (i+1)-th plan for processing the to-be-processed task through the tree-of-thought technology and based on the to-be-processed task, the tool description information, and execution results corresponding to respective ones of the first i plans; and execute the (i+1)-th plan through the tool agent technology to obtain an execution result corresponding to the (i+1)-th plan; where i is initially 1, and i is a positive integer greater than or equal to 1;
when it is determined through the tool agent technology and based on execution results corresponding to respective ones of the first i+1 plans that the to-be-processed task has not been completed, updating i to i+1, and repeating execution of the third operation; and
when it is determined through the tool agent technology and based on the execution results corresponding to respective ones of the first i+1 plans that the to-be-processed task has been completed, determining the second response information through determination technology and based on the execution results corresponding to respective ones of the first i+1 plans.

The completion rate of the to-be-processed task can be improved by determining, through the tool agent technology, whether the to-be-processed task has been completed, and by determining the response information for the to-be-processed task based on the determination result, thereby avoiding outputting, as the response information, the execution results corresponding to respective ones of the first i plans when the to-be-processed task is not completed.

In a possible implementation, the determining the (i+1)-th plan for processing the to-be-processed task through the tree-of-thought technology and based on the to-be-processed task, the tool description information, and the execution results corresponding to respective ones of the first i plans includes:
generating a candidate node set of an (i+1)-th level through the tree-of-thought technology and based on the to-be-processed task, the tool description information, and the execution results corresponding to respective ones of the first i plans, where each candidate node in the candidate node set of the (i+1)-th level corresponds to a candidate plan;
determining scores for the candidate nodes in the candidate node set of the (i+1)-th level based on candidate plan evaluation parameters; and
determining a target node at the (i+1)-th level in the candidate node set of the (i+1)-th level based on the scores of the candidate nodes in the candidate node set of the (i+1)-th level, and determining the candidate plan corresponding to the target node at the (i+1)-th level as the (i+1)-th plan.

Through the above steps, when the to-be-processed task has not been completed, a candidate node set of an (i+1)-th level is generated based on the first i plans through the tree-of-thought technology, and a target node at the (i+1)-th level is selected in the candidate node set of the (i+1)-th level based on the scores of the candidate nodes, thereby enabling preferential execution of candidate plans corresponding to candidate nodes with higher scores and improving the efficiency and quality of response information generation.

In a possible implementation, the executing the (i+1)-th plan through the tool agent technology to obtain the execution result corresponding to the (i+1)-th plan includes:
determining, through the tool agent technology and based on the (i+1)-th plan, the tool description information, the to-be-processed task, and the execution results corresponding to respective ones of the first i plans, a target tool for executing the (i+1)-th plan and input parameters of the target tool; and
executing the (i+1)-th plan through the tool agent technology and based on the target tool and the input parameters of the target tool to obtain the execution result corresponding to the (i+1)-th plan.

Through the above steps, an appropriate target tool and input parameters of the target tool can be selected for the (i+1)-th plan, thereby effectively executing the (i+1)-th plan.

In a possible implementation, the determining the second response information through the determination technology and based on the execution results corresponding to respective ones of the first i+1 plans includes:
executing a fourth operation, where the fourth operation includes determining, through the determination technology and based on the to-be-processed task and an execution result corresponding to a target plan, whether the target plan meets quality requirements, the target plan initially includes the first i+1 plans, and the execution result corresponding to the target plan initially includes the execution results corresponding to respective ones of the first i+1 plans; and
when the target plan meets the quality requirements, determining the second response information based on the execution result corresponding to the target plan.

Through the above steps, quality evaluation is performed on the target plan, and when the target plan meets the quality requirements, the second response information is output, thereby improving the quality of the response information.

In a possible implementation, the method further includes:
when the target plan does not meet the quality requirements, updating the target plan through the tree-of-thought technology to obtain an updated target plan; and
repeating execution of the fourth operation through the determination technology and based on the execution result corresponding to the updated target plan.

Through the above steps, quality evaluation is performed on the target plan, and when the target plan does not meet the quality requirements, the target plan is updated, thereby avoiding outputting, as the response information, execution results not meeting the quality requirements and improving the quality of the response information.

According to a second aspect, embodiments of the present application provide a task processing apparatus, including:
a receiving unit configured to receive an input to-be-processed task;
a first processing unit configured to determine, based on the to-be-processed task and tool description information, an initial plan for processing the to-be-processed task, where the initial plan includes an initial step for processing the to-be-processed task and tools required for the initial plan;
an execution unit configured to execute the initial plan based on the initial step and the tools required for the initial plan to obtain an execution result corresponding to the initial plan; and
a second processing unit configured to determine response information for the to-be-processed task based on the execution result corresponding to the initial plan.

In a possible implementation, the first processing unit is specifically configured to:
generate a first candidate plan set based on the to-be-processed task and the tool description information, where the first candidate plan set includes at least one candidate plan;
determine scores for the respective candidate plans in the first candidate plan set based on candidate plan evaluation parameters; and
determine the initial plan in the first candidate plan set based on the scores of the respective candidate plans in the first candidate plan set.

In a possible implementation, the second processing unit is specifically configured to:
determine, based on the execution result corresponding to the initial plan, whether the to-be-processed task has been completed;
when the to-be-processed task is determined to have been completed, determine first response information based on the to-be-processed task and the execution result corresponding to the initial plan; and
when the to-be-processed task is determined not to have been completed, determine second response information based on the to-be-processed task, the tool description information, and the execution result corresponding to the initial plan.

In a possible implementation, the second processing unit is specifically configured to:
execute a first operation, where the first operation includes: determining an (i+1)-th plan for processing the to-be-processed task based on the to-be-processed task, the tool description information, and execution results corresponding to respective ones of the first i plans; and executing the (i+1)-th plan to obtain an execution result corresponding to the (i+1)-th plan; where i is initially 1, and i is a positive integer greater than or equal to 1;
when the to-be-processed task is determined not to have been completed based on execution results corresponding to respective ones of the first i+1 plans, update i to i+1, and repeat execution of the first operation; and
when the to-be-processed task is determined to have been completed based on the execution results corresponding to respective ones of the first i+1 plans, determine the second response information based on the execution results corresponding to respective ones of the first i+1 plans.

In a possible implementation, the second processing unit is specifically configured to:
generate an (i+1)-th candidate plan set based on the to-be-processed task, the tool description information, and the execution results corresponding to respective ones of the first i plans, where the (i+1)-th candidate plan set includes at least one candidate plan;
determine scores for the respective candidate plans in the (i+1)-th candidate plan set based on candidate plan evaluation parameters; and
determine the (i+1)-th plan in the (i+1)-th candidate plan set based on the scores of the respective candidate plans in the (i+1)-th candidate plan set.

In a possible implementation, the second processing unit is specifically configured to:
determine, based on the (i+1)-th plan, the tool description information, the to-be-processed task, and the execution results corresponding to respective ones of the first i plans, a target tool for executing the (i+1)-th plan and input parameters of the target tool; and
execute the (i+1)-th plan based on the target tool and the input parameters of the target tool to obtain the execution result corresponding to the (i+1)-th plan.

In a possible implementation, the second processing unit is specifically configured to:
execute a second operation, where the second operation includes determining, based on the to-be-processed task and an execution result corresponding to a target plan, whether the target plan meets quality requirements, the target plan initially includes the first i+1 plans, and the execution result corresponding to the target plan initially includes the execution results corresponding to respective ones of the first i+1 plans; and
when the target plan meets the quality requirements, determine the second response information based on the execution result corresponding to the target plan.

In a possible implementation, the second processing unit is further configured to:
when the target plan does not meet the quality requirements, update the target plan to obtain an updated target plan; and
repeat execution of the second operation based on the execution result corresponding to the updated target plan.

In a possible implementation, the second processing unit is specifically configured to:
determine a candidate plan set corresponding to a j-th plan in candidate plan sets corresponding to the first i+1 plans, where an unexecuted candidate plan exists in the candidate plan set corresponding to the j-th plan, and j is a positive integer less than or equal to i+1;
determine a target candidate plan in the unexecuted candidate plans based on scores of the unexecuted candidate plans; and
update the target plan based on the target candidate plan to obtain the updated target plan.

In a possible implementation, the first processing unit is specifically configured to:
generate a candidate node set of a first level in a tree of thought through tree-of-thought technology and based on the to-be-processed task and the tool description information, where each candidate node in the candidate node set of the first level corresponds to a candidate plan;
determine scores for the candidate nodes in the candidate node set of the first level based on candidate plan evaluation parameters; and
determine a target node at the first level in the candidate node set of the first level based on the scores of the candidate nodes in the candidate node set of the first level, and determine the candidate plan corresponding to the target node at the first level as the initial plan.

In a possible implementation, the second processing unit is specifically configured to:
determine, through tool agent technology and based on the execution result corresponding to the initial plan, whether the to-be-processed task has been completed;
when the to-be-processed task is determined to have been completed, determine first response information through determination technology and based on the to-be-processed task and the execution result corresponding to the initial plan; and
when the to-be-processed task is determined not to have been completed, determine second response information through tree-of-thought technology and the tool agent technology and based on the to-be-processed task, the tool description information, and the execution result corresponding to the initial plan.

In a possible implementation, the second processing unit is specifically configured to:
execute a third operation, where the third operation includes: determining an (i+1)-th plan for processing the to-be-processed task through the tree-of-thought technology and based on the to-be-processed task, the tool description information, and execution results corresponding to respective ones of the first i plans; and executing the (i+1)-th plan through the tool agent technology to obtain an execution result corresponding to the (i+1)-th plan; where i is initially 1, and i is a positive integer greater than or equal to 1;
when it is determined through the tool agent technology and based on execution results corresponding to respective ones of the first i+1 plans that the to-be-processed task has not been completed, update i to i+1, and repeat execution of the third operation; and
when it is determined through the tool agent technology and based on execution results corresponding to respective ones of the first i+1 plans that the to-be-processed task has been completed, determine the second response information through determination technology and based on the execution results corresponding to respective ones of the first i+1 plans.

In a possible implementation, the second processing unit is specifically configured to:
generate a candidate node set of an (i+1)-th level through the tree-of-thought technology and based on the to-be-processed task, the tool description information, and the execution results corresponding to respective ones of the first i plans, where each candidate node in the candidate node set of the (i+1)-th level corresponds to a candidate plan;
determine scores for the candidate nodes in the candidate node set of the (i+1)-th level based on candidate plan evaluation parameters; and
determine a target node at the (i+1)-th level in the candidate node set of the (i+1)-th level based on the scores of the candidate nodes in the candidate node set of the (i+1)-th level, and determine the candidate plan corresponding to the target node at the (i+1)-th level as the (i+1)-th plan.

In a possible implementation, the second processing unit is specifically configured to:
determine, through the tool agent technology and based on the (i+1)-th plan, the tool description information, the to-be-processed task, and the execution results corresponding to respective ones of the first i plans, a target tool for executing the (i+1)-th plan and input parameters of the target tool; and
execute the (i+1)-th plan through the tool agent technology and based on the target tool and the input parameters of the target tool to obtain the execution result corresponding to the (i+1)-th plan.

In a possible implementation, the second processing unit is specifically configured to:
execute a fourth operation, where the fourth operation includes determining, through the determination technology and based on the to-be-processed task and an execution result corresponding to a target plan, whether the target plan meets quality requirements, the target plan initially includes the first i+1 plans, and the execution result corresponding to the target plan initially includes the execution results corresponding to respective ones of the first i+1 plans; and
when the target plan meets the quality requirements, determine the second response information based on the execution result corresponding to the target plan.

In a possible implementation, the second processing unit is further configured to:
when the target plan does not meet the quality requirements, update the target plan through the tree-of-thought technology to obtain an updated target plan; and
repeat execution of the fourth operation through the determination technology and based on the execution result corresponding to the updated target plan.

According to a third aspect, embodiments of the present application provide a task processing device, including at least one processor and a memory; where
the memory stores computer executable instructions; and
the at least one processor executes the computer executable instructions stored in the memory, causing the at least one processor to execute the task processing method according to any one of the first aspect.

According to a fourth aspect, embodiments of the present application provide a computer-readable storage medium, where computer executable instructions are stored in the computer-readable storage medium, and the computer executable instructions, when executed by a controller, are configured to implement the task processing method according to any one of the first aspect.

According to a fifth aspect, embodiments of the present application provide a computer program product, including a computer program, where the computer program, when executed by a controller, implements the task processing method according to any one of the first aspect.

In the task processing method, task processing apparatus, and task processing device provided in the embodiments of the present application, an input to-be-processed task is first received, and an initial plan for processing the to-be-processed task is determined based on the to-be-processed task and tool description information, where the initial plan includes an initial step for processing the to-be-processed task and tools required for the initial plan. The initial plan is then executed based on the initial step and the tools required for the initial plan to obtain an execution result corresponding to the initial plan. Finally, response information for the to-be-processed task is determined based on the execution result corresponding to the initial plan. According to the solution of the embodiments of the present application, for the to-be-processed task, the tools required for the initial plan may be determined in combination with the tool description information, such that system tools are flexibly invoked to execute the initial plan, and the response information for the to-be-processed task is then obtained, thereby implementing processing of the to-be-processed task input by the user, and solving the problem that currently only questions raised by users can be answered, but task processing cannot be performed.

### BRIEF DESCRIPTION OF DRAWINGS

To describe the technical solutions of the present application more clearly, the following briefly describes the accompanying drawings required for describing the embodiments of the present application. Apparently, the accompanying drawings in the following description show merely some embodiments of the present application, and persons of ordinary skill in the art may still derive other drawings of the embodiments from the accompanying drawings without creative efforts.
FIG. 1 is a schematic diagram of an application scenario according to embodiments of the present application.
FIG. 2 is a flowchart of a task processing method according to embodiments of the present application.
FIG. 3 is a schematic diagram of determining an initial plan according to embodiments of the present application.
FIG. 4 is a flowchart of task processing according to embodiments of the present application.
FIG. 5 is a flowchart of determining response information for a to-be-processed task according to embodiments of the present application.
FIG. 6 is a flowchart of determining response information according to embodiments of the present application.
FIG. 7 is a schematic diagram of a tool invocation process and large language model reasoning according to embodiments of the present application.
FIG. 8 is a flowchart of determining response information according to embodiments of the present application.
FIG. 9 is a schematic diagram of updating a target plan according to embodiments of the present application.
FIG. 10 is a structural schematic diagram of a task processing apparatus according to embodiments of the present application.
FIG. 11 is a structural schematic diagram of a task processing device according to embodiments of the present application.

The above accompanying drawings illustrate specific embodiments of the present application, which will be described in more detail below. These accompanying drawings and textual descriptions are not intended to limit the scope of the concepts of the present application in any manner, but rather to illustrate the concepts of the present application to those skilled in the art by reference to specific embodiments.

### DESCRIPTION OF EMBODIMENTS

Exemplary embodiments will be described in detail herein, examples of which are illustrated in the accompanying drawings. When reference is made to the accompanying drawings below, unless otherwise indicated, the same numbers in different accompanying drawings represent the same or similar elements. The implementations described in the following exemplary embodiments do not represent all implementations consistent with the present application. On the contrary, they are merely examples of apparatuses and methods consistent with some aspects of the present application as detailed in the appended claims.

The terms "first", "second", and the like used in the present application are used to distinguish similar objects and are not necessarily used to describe a specific order or sequence. It should be understood that such data used in this way may be interchanged as appropriate so that the embodiments described herein can be implemented in sequences other than those illustrated or described herein.

In addition, the terms "include" and "have" and any variations thereof are intended to cover non-exclusive inclusions. For example, processes, methods, systems, products, or devices that include a series of steps or modules are not necessarily limited to those steps or modules that are clearly listed, but may include other steps or modules that are not clearly listed or inherent to these processes, methods, systems, products, or devices.

The division of modules presented herein is merely a logical division, and in actual implementation, there may be other division methods. For example, a plurality of modules may be combined or integrated into another system, or some features may be ignored or not executed. In addition, the displayed or discussed couplings or direct couplings or communication connections between each other may be implemented through some interfaces, and the indirect couplings or communication connections between modules may be implemented in electrical or other similar forms, which are not limited herein. Moreover, modules or submodules described as separate components may or may not be physically separated, may or may not be physical modules, or may be distributed to a plurality of circuit modules. Some or all of the modules or units may be selected according to actual needs to achieve the objectives of the solution of the embodiments of the present application.

With the rapid development of information technology, the demand for customer service continues to increase. Due to issues associated with human customer service, such as low resolution efficiency, high labor costs, long training cycles, and inability to provide round-the-clock service, human customer service may no longer meet the demands of modern users for efficient and convenient services. Accordingly, intelligent customer service technology has emerged.

Intelligent customer service technology is mainly applied to intelligent customer service robots. After a user inputs a question, an intelligent customer service robot may parse and process the input question and output a corresponding response. At present, there are mainly two approaches for parsing and processing input questions by intelligent customer service robots. In one approach, a question raised by a user is parsed and processed through preset rules and data training models. Answers generated by this approach are overly fixed and lack flexibility, and cannot accurately respond to new types of questions. In another approach, large-scale pre-trained language models and document knowledge graph construction technology are utilized to retrieve relevant content from documents and generate an answer for the question raised by the user. This approach is limited by retrieval accuracy and data volume, and is prone to generating irrelevant answers, and lacks flexibility.

Embodiments of the present application provide a task processing method to implement processing of tasks input by users. The solutions of embodiments of the present application will be described below with reference to the accompanying drawings.

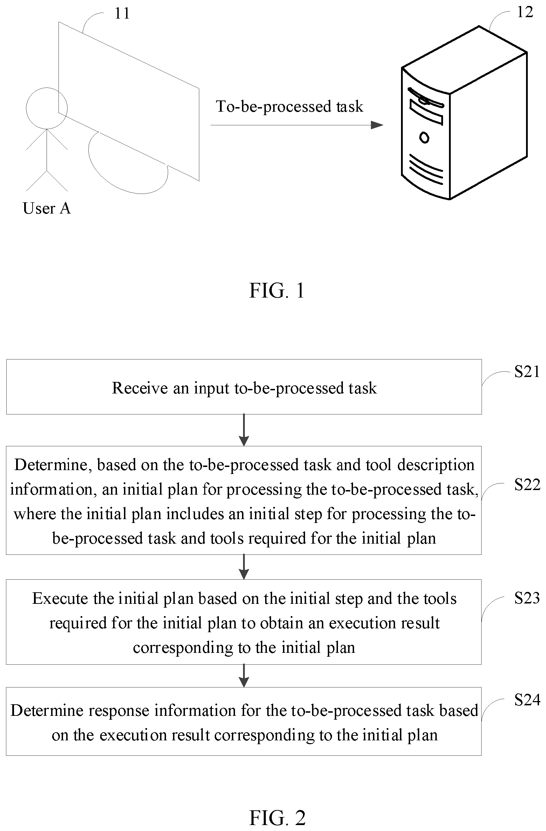

First, an applicable application scenario according to embodiments of the present application is introduced with reference to FIG. 1.

FIG. 1 is a schematic diagram of an applicable application scenario according to embodiments of the present application. As shown in FIG. 1, a client 11 and a server 12 are included, and information exchange may be performed between the client 11 and the server 12.

A user A may input a to-be-processed task through the client 11, and the client 11 sends the to-be-processed task input by the user A to the server 12. The server 12 processes the to-be-processed task to obtain response information, and outputs the response information through the client 11.

It should be noted that the client 11 and the server 12 may be two independent devices or two different components within the same device, which is not limited in the embodiments of the present application. For example, the client 11 and the server 12 may be two components of an intelligent customer service robot, where the client 11 serves as an input and output component of the intelligent customer service robot, configured to receive the to-be-processed task input by user A and output the response information, and the server 12 serves as a processing component of the intelligent customer service robot, configured to parse and process the to-be-processed task to obtain the response information.

Based on the application scenario in the example of FIG. 1, the solutions according to embodiments of the present application are described below with reference to FIG. 2.

FIG. 2 is a flowchart of a task processing method according to embodiments of the present application. As shown in FIG. 2, the method includes the following steps.

S21: receiving an input to-be-processed task.

An execution entity of the embodiments of the present application may be a server, a processor, a microprocessor, or other components with data processing capabilities, or a device integrating components such as a server, a processor, and a microprocessor, such as an electronic device. The embodiments of the present application do not limit the execution entity, and any device with data processing capabilities may be used. In the following embodiments, the execution entity is described by taking a server as an example.

The server receives the to-be-processed task, where the to-be-processed task may be input by a user through voice, or input by the user through devices such as a keyboard, a mouse, or a client, which is not limited in the embodiments of the present application.

The to-be-processed task may be of different types. For example, the to-be-processed task may be a question input by the user, and the server needs to answer the question. For example, the to-be-processed task may be an operation that the user intends to perform, and the server needs to execute a corresponding operation based on the to-be-processed task.

S22: determining, based on the to-be-processed task and tool description information, an initial plan for processing the to-be-processed task, where the initial plan includes an initial step for processing the to-be-processed task and tools required for the initial plan.

The tool description information refers to information configured to describe respective tools. A plurality of different tools are preconfigured in the system. Different tools have different functions and different usage methods, and therefore correspond to different tool description information.

The tool description information may include, for example but is not limited to, one or more of information for describing the name, function, usage method, input parameters, output parameters, tool type, and the like of a tool.

Taking a WiFi configuration tool as an example of the tool, the name of the tool is WiFi configuration tool, and its function is to create a service set identifier (SSID) signal through a wireless access point (AP) device. Input parameters include a name and a password for setting up WiFi. The usage method is that, after invocation, the configured WiFi name and password are input through an API interface. The output is information indicating whether the WiFi is successfully created. All the above information may serve as tool description information for the project creation tool.

Taking a user tool as an example of the tool, the name of the tool is user tool, and its function is to query the user when the user information is unclear. An input parameter is a follow-up question. The usage method is that, after invocation, the client outputs the follow-up question to the user, and after the user answers, the answer is output to the system as return information of the user tool. An output parameter is the user's answer. All the above information may serve as tool description information for the user tool.

Taking an expert tool as an example of the tool, the name of the tool is expert tool, and its function is to seek help from human customer service personnel when the server cannot resolve a related problem. An input parameter is question requiring assistance. The usage method is that, after invocation, the question is sent to a backend human customer service agent, and after the human customer service agent resolves the problem, the solution is returned to the system. An output parameter is the solution. All the above information may serve as tool description information for the expert tool.

In the above embodiments, the tool description information is described by taking the WiFi configuration tool, the user tool, and the expert tool as examples of the tool. It should be noted that other types of tools may also be preconfigured in the system, and corresponding tool description information is also included.

After receiving the to-be-processed task, the server determines an initial plan based on the to-be-processed task and tool description information, where the initial plan includes an initial step and tools required for the initial plan.

In a possible implementation, the server may parse the to-be-processed task to determine initial steps required for processing the to-be-processed task, then determine, in combination with the tool description information, tools required for executing the initial step, and determine the tool as the tools required for the initial plan.

In a possible implementation, the server may convert the to-be-processed task and the tool description information into a corresponding prompt (prompt) and input the corresponding prompt into a large language model, and the large language model outputs the initial plan for processing the to-be-processed task.

In an example in which the to-be-processed task is "help me set up networking" and the system pre-configured tools include tool A (WiFi configuration tool) and tool B (user tool), the prompt may be, for example:
"To-be-processed task: help me set up networking;
Now there are system pre-configured tool A and tool B;

Tool description information of tool A is as follows: tool name - WiFi configuration tool; function - creating an SSID signal through an AP device; input parameters - a name and a password for setting up WiFi; usage method - after invocation, input the configured WiFi name and password through an API interface; output - information indicating whether the WiFi is successfully created;

Tool description information of tool B is as follows: tool name - user tool; function - querying the user when user information is unclear; input parameter - a follow-up question; usage method - after invocation, the client outputs the follow-up question to the user, and after the user answers, the answer is returned to the system as output of the user tool; output parameter - the user's answer;

Generate an initial plan for the to-be-processed task based on the above information."

In a possible implementation, the server may convert the to-be-processed task and the tool description information into a corresponding prompt and input the corresponding prompt into a large language model, and the large language model outputs a first candidate plan set, where the first candidate plan set includes a plurality of candidate plans for processing the to-be-processed task. Then, scores of the respective candidate plans in the first candidate plan set are determined based on candidate plan evaluation parameters, and the initial plan in the first candidate plan set is determined based on the scores of the respective candidate plans.

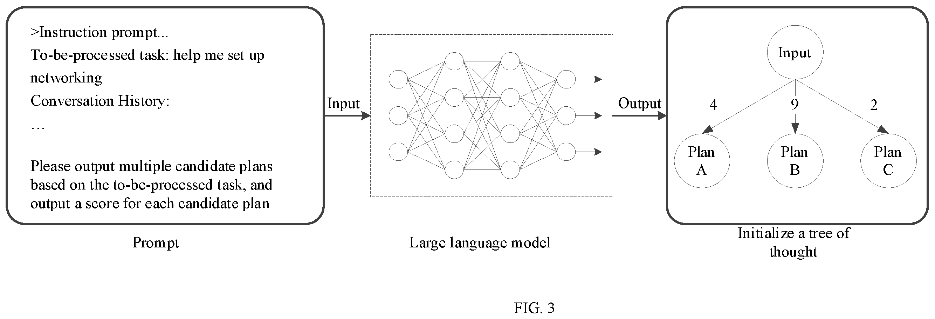

For details of this process, reference may be made to the example of FIG. 3. FIG. 3 is a schematic diagram of determining an initial plan according to embodiments of the present application. As shown in FIG. 3, the to-be-processed task is "help me set up networking". Based on the to-be-processed task and the tool description information, a corresponding prompt is obtained (reference may be made to the example of the prompt in FIG. 3), and is input into a large language model. The large language model generates a first candidate plan set and scores of respective candidate plans based on the prompt.

In an example in which the to-be-processed task is "help me set up networking" and the system pre-configured tools include tool A (WiFi configuration tool) and tool B (user tool), the prompt may be, for example:
"To-be-processed task: help me set up networking;
Now there are system pre-configured tool A and tool B;

Tool description information of tool A is as follows: tool name - WiFi configuration tool; function - creating an SSID signal through an AP device; input parameters - a name and a password for setting up WiFi; usage method - after invocation, input the configured WiFi name and password through an API interface; output - information indicating whether the WiFi is successfully created;

Tool description information of tool B is as follows: tool name - user tool; function - querying the user when user information is unclear; input parameter - a follow-up question; usage method - after invocation, the client outputs the follow-up question to the user, and after the user answers, the answer is returned to the system as output of the user tool; output parameter - the user's answer;

Generate a first candidate plan set based on the above information, and generate scores for the respective candidate plans in the first candidate plan set from aspects such as feasibility, resource utilization, and efficiency."

In the embodiments of the present application, the first candidate plan set may be generated by initializing a tree of thought. As shown in FIG. 3, after the prompt is obtained based on the to-be-processed task and the tool description information, the first candidate plan set is obtained through processing by the large language model. The first candidate plan set includes plan A, plan B, and plan C, and these three plans correspond to three initial nodes of the tree of thought. Further, scores of these three plans may be output through the large language model. As shown in FIG. 3, the score of plan A is 4, the score of plan B is 9, and the score of plan C is 2. Then, the server determines plan B with the highest score as the initial plan.

S23: executing the initial plan based on the initial step and the tools required for the initial plan to obtain an execution result corresponding to the initial plan.

After obtaining the initial step and the tools required for the initial plan, the server may invoke the tools required for the initial plan based on the initial step to execute the initial plan and obtain a corresponding execution result.

For example, the server may determine output parameters of the tools required for the initial plan, the names of the tools, and the like based on the initial step, then invoke the tools based on the names of the tools and the output parameters to execute the initial plan and obtain the execution result corresponding to the initial plan.

For example, the server may convert the initial step and the tool description information of the tools required for the initial plan into a corresponding prompt and input the corresponding prompt into a large language model, and the large language model outputs the names of the tools to be invoked and their input parameters and executes the initial plan through an API interface, and execution results of the tools are acquired, thereby obtaining an execution result corresponding to the initial plan.

In an example in which the to-be-processed task is "help me set up networking", the initial plan is creating a project interface, and the required tool is tool A (WiFi configuration tool), the prompt may be, for example:
"To-be-processed task: help me set up networking;
Tool description information of tool A is as follows: tool name - WiFi configuration tool; function - creating an SSID signal through an AP device; input parameters - a name and a password for setting up WiFi; usage method - after invocation, input the configured WiFi name and password through an API interface; output - information indicating whether the WiFi is successfully created;
Initial plan: create a project interface;
Output a name of the tool to be invoked and its input parameters based on the above information."

S24: determining response information for the to-be-processed task based on the execution result corresponding to the initial plan.

After obtaining the execution result corresponding to the initial plan, the server may directly determine the execution result corresponding to the initial plan as the response information for the to-be-processed task and output the response information. Based on the execution result corresponding to the initial plan, the server may also determine whether the to-be-processed task has been completed. If it is determined that the to-be-processed task has been completed, the execution result corresponding to the initial plan and the to-be-processed task are converted into a corresponding prompt, then the corresponding prompt is input into a large language model, and the large language model outputs a quality evaluation result. The quality evaluation result is configured to indicate whether the initial plan meets the quality requirements, that is, whether the execution result corresponding to the initial plan can resolve the to-be-processed task.

In an example in which the to-be-processed task is "help me set up networking" and the initial plan is creating a project interface, the prompt may be, for example:
"To-be-processed task: help me set up networking;
Execution result corresponding to the initial plan: project interface has been successfully created;
Output a quality evaluation result based on the above information, in the format of True/False (choose one of the two)."

Optionally, the quality evaluation result may be indicated by the fields "True" or "False", where "True" indicates that the initial plan meets the quality requirements, that is, the execution result corresponding to the initial plan can resolve the to-be-processed task, and "False" indicates that the initial plan does not meet the quality requirements, that is, the execution result corresponding to the initial plan cannot resolve the to-be-processed task. Then, the response information for the to-be-processed task is determined in combination with the quality evaluation result and the execution result corresponding to the initial plan, and the response information is output.

In the task processing method provided in embodiments of the present application, an input to-be-processed task is first received, and an initial plan for processing the to-be-processed task is determined based on the to-be-processed task and tool description information, where the initial plan includes an initial step for processing the to-be-processed task and tools required for the initial plan. The initial plan is then executed based on the initial step and the tools required for the initial plan to obtain an execution result corresponding to the initial plan. Finally, response information for the to-be-processed task is determined based on the execution result corresponding to the initial plan. According to the solution of the embodiments of the present application, for the to-be-processed task, the tools required for the initial plan may be determined in combination with the tool description information, such that system tools are flexibly invoked to execute the initial plan, and the response information for the to-be-processed task is then obtained, thereby implementing processing of the to-be-processed task input by the user, and solving the problem that currently only questions raised by users can be answered, but task processing cannot be performed.

Based on any of the above embodiments, the solutions of embodiments of the present application are further described below with reference to the accompanying drawings.

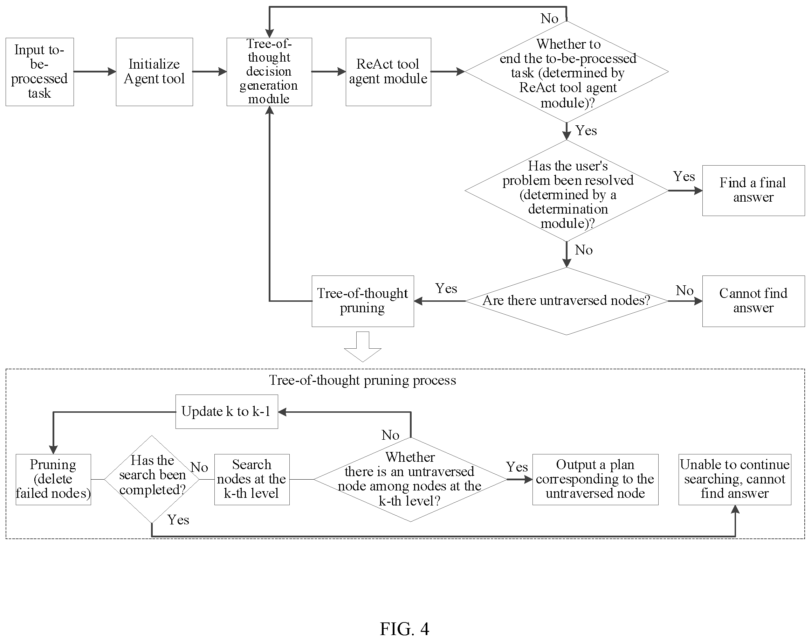

First, the overall process framework of the solution of the embodiments of the present application is described with reference to FIG. 4.

FIG. 4 is a flowchart of task processing according to embodiments of the present application. As shown in FIG. 4, first, an input to-be-processed task is received, and then an agent (Agent) tool is initialized, where the process of initializing the agent tool is a process of acquiring tool description information of respective tools preconfigured in the system.

Then, the to-be-processed task and the tool description information are input to a tree-of-thought decision generation module. The tree-of-thought decision generation module represents a solution process of the to-be-processed task as a tree, where nodes in the tree of thought represent a part of the solution, and the tree-of-thought decision generation module searches for different solutions on the tree of thought by maintaining the tree of thought to implement processing of the to-be-processed task.

As shown in FIG. 4, the processing process of the tree-of-thought decision generation module generally includes: outputting a plurality of candidate plans, evaluating the plurality of candidate plans, growing the tree of thought, and outputting a plan to be executed.

After outputting the plan to be executed, the tree-of-thought decision generation module inputs the plan to a reason and action (reason and act, ReAct) tool agent module (also referred to as a tool agent module). The processing process of the ReAct tool agent module generally includes: thinking about the plan to be executed, invoking tools to execute the plan to be executed, and outputting an execution result.

Initially, the tree-of-thought decision generation module may generate a candidate node set of a first level in the tree of thought through tree-of-thought technology and based on the to-be-processed task and the tool description information, where the candidate node set of the first level includes a plurality of candidate nodes, and each node corresponds to a candidate plan. For example, three nodes in FIG. 3 are among a plurality of candidate nodes in the candidate node set of the first level in the tree of thought, and plans corresponding to the three nodes are plan A, plan B, and plan C, respectively.

After generating the candidate node set of the first level, the tree-of-thought decision generation module determines scores for the candidate nodes in the candidate node set of the first level based on candidate plan evaluation parameters.

The candidate plan evaluation parameters are configured to indicate criteria for scoring candidate plans. Correspondingly, the candidate plan evaluation parameters may be scores under dimensions of scoring criteria. The scoring criteria may include, for example, dimensions such as feasibility, efficiency, and resource utilization of the candidate plan, and the scores under the dimensions of scoring criteria may include, for example, feasibility score, efficiency score, resource utilization score, and the like of a candidate plan. For each candidate node in the candidate node set of the first level, the tree-of-thought decision generation module may determine a score of the candidate node based on a score of the candidate plan corresponding to the candidate node under at least one dimension of the scoring criteria, where the score under at least one dimension of the scoring criteria may include at least one of feasibility score, efficiency score, or resource utilization score.

Then, the tree-of-thought decision generation module determines a target node at the first level in the candidate node set of the first level based on the scores of the candidate nodes in the candidate node set of the first level, and determines a candidate plan corresponding to the target node at the first level as the initial plan.

After determining the initial plan, the tree-of-thought decision generation module inputs the initial plan to the ReAct tool agent module, and the ReAct tool agent module executes the initial plan through tool agent technology to obtain an execution result corresponding to the initial plan. Specifically, the ReAct tool agent module may determine a tool for executing the initial plan and input parameters of the tool based on the initial plan, the tool description information, and the to-be-processed task through tool agent technology. Then, the ReAct tool agent module executes the initial plan through tool agent technology and based on the tool and the corresponding input parameters to obtain an execution result corresponding to the initial plan.

After obtaining the execution result corresponding to the initial plan, through tool agent technology and based on the execution result corresponding to the initial plan, the ReAct tool agent module determines whether the to-be-processed task has been completed. The determination performed by the ReAct tool agent module on the execution result corresponding to the initial plan involves determining the completeness of execution of the to-be-processed task. As shown in FIG. 4, it is determined whether the to-be-processed task is completed (determined by the ReAct tool agent module). Specifically, the ReAct tool agent module may convert the execution result corresponding to the initial plan and the to-be-processed task into a corresponding prompt and input the corresponding prompt into a large language model, and the large language model outputs a determination result, where the determination result indicates whether the to-be-processed task has been completed.

When the to-be-processed task is determined to have been completed, the ReAct tool agent module sends the to-be-processed task and the execution result corresponding to the initial plan to a determination module. The determination module determines first response information through determination technology and based on the to-be-processed task and the execution result corresponding to the initial plan.

Specifically, through determination technology and based on the to-be-processed task and the execution result corresponding to the initial plan, the determination module may determine whether the initial plan meets the quality requirements. As shown in FIG. 4, it is determined whether the user's problem has been resolved (determined by the determination module). If yes, the execution result corresponding to the initial plan may be determined as the first response information. As shown in FIG. 4, it is determined that the final answer can be found. If no, it is first determined whether there are untraversed nodes. Currently, there are candidate nodes in the candidate node set of the first level in the tree of thought. If there are untraversed candidate nodes (that is, unexecuted candidate plans) in the candidate node set of the first level, a tree-of-thought pruning operation may be performed, then the determination module may send a quality evaluation result to the tree-of-thought decision generation module. The tree-of-thought decision generation module reselects a candidate node as the updated target node at the first level through tree-of-thought technology and based on the scores of the candidate nodes in the candidate node set of the first level, determines the candidate plan corresponding to the updated target node at the first level as the updated initial plan, and repeats execution of the above steps based on the updated initial plan. If there are no untraversed candidate nodes, it may be determined that no answer can be found.

When the to-be-processed task is determined not to have been completed, second response information is determined through tree-of-thought technology and tool agent technology and based on the to-be-processed task, the tool description information, and the execution result corresponding to the initial plan.

Specifically, a third operation is executed, where the third operation includes: determining an (i+1)-th plan for processing the to-be-processed task by the tree-of-thought decision generation module through tree-of-thought technology and based on the to-be-processed task, the tool description information, and execution results corresponding to respective ones of the first i plans, and sending the (i+1)-th plan to the ReAct tool agent module; and executing, by the ReAct tool agent module through tool agent technology, the (i+1)-th plan to obtain an execution result corresponding to the (i+1)-th plan; where i is initially 1, and i is a positive integer greater than or equal to 1.

In the process by which the tree-of-thought decision generation module determines the (i+1)-th plan through tree-of-thought technology, the tree-of-thought decision generation module first generates a candidate node set of an (i+1)-th level through tree-of-thought technology and based on the to-be-processed task, the tool description information, and execution results corresponding to respective ones of the first i plans, where each candidate node in the candidate node set of the (i+1)-th level corresponds to a candidate plan. Then, the tree-of-thought decision generation module determines scores for the candidate nodes in the candidate node set of the (i+1)-th level based on candidate plan evaluation parameters. Finally, the tree-of-thought decision generation module determines a target node at the (i+1)-th level in the candidate node set of the (i+1)-th level based on the scores of the candidate nodes in the candidate node set of the (i+1)-th level, and determines a candidate plan corresponding to the target node at the (i+1)-th level as the (i+1)-th plan.

In the process by which the ReAct tool agent module executes the (i+1)-th plan through tool agent technology, through tool agent technology and based on the (i+1)-th plan, the tool description information, the to-be-processed task, and execution results corresponding to respective ones of the first i plans, the ReAct tool agent module determines a target tool for executing the (i+1)-th plan and input parameters of the target tool; then executes the (i+1)-th plan through tool agent technology and based on the target tool and the input parameters of the target tool to obtain an execution result corresponding to the (i+1)-th plan.

After the ReAct tool agent module executes the (i+1)-th plan and obtains the execution result corresponding to the (i+1)-th plan, through tool agent technology, the ReAct tool agent module determines whether the to-be-processed task is completed, that is, determining, based on execution results corresponding to respective ones of the first i+1 plans, whether the to-be-processed task is completed. As shown in FIG. 4, this corresponds to determining whether the to-be-processed task is completed (determined by the ReAct tool agent module). Specifically, the ReAct tool agent module may convert the execution results corresponding to respective ones of the first i+1 plans and the to-be-processed task into a corresponding prompt and input the corresponding prompt into a large language model, and the large language model outputs a determination result, where the determination result indicates whether the to-be-processed task has been completed.

In the ReAct tool agent module, when it is determined, through tool agent technology and based on execution results corresponding to respective ones of the first i+1 plans, that the to-be-processed task is not completed, the ReAct tool agent module sends the execution result corresponding to the (i+1)-th plan to the tree-of-thought decision generation module, and updates i to i+1, and repeats execution of the third operation. As shown in FIG. 4, when the to-be-processed task has not been completed, the tree of thought needs to be grown by the tree-of-thought decision generation module to generate a candidate node set of a next level, and the above steps are repeated.

In the ReAct tool agent module, when it is determined, through tool agent technology and based on execution results corresponding to respective ones of the first i+1 plans, that the to-be-processed task has been completed, the ReAct tool agent module sends the execution results corresponding to respective ones of the first i+1 plans to the determination module. The determination module determines second response information through determination technology and based on the execution results corresponding to respective ones of the first i+1 plans. As shown in FIG. 4, when the to-be-processed task has been completed, the determination module determines whether the user's problem has been resolved.

Specifically, the determination module executes a fourth operation, where the fourth operation includes: determining, through determination technology and based on the to-be-processed task and an execution result corresponding to the target plan, whether a target plan meets quality requirements, the target plan initially includes the first i+1 plans, and the execution result corresponding to the target plan initially includes the execution results corresponding to respective ones of the first i+1 plans.

When the target plan meets the quality requirements, the determination module determines the second response information based on the execution result corresponding to the target plan. As shown in FIG. 4, if the user's problem has been resolved, it may be determined that the final answer can be found.

When the target plan does not meet the quality requirements, the determination module sends the target plan to the tree-of-thought decision generation module. The tree-of-thought decision generation module updates the target plan through tree-of-thought technology to obtain an updated target plan, and sends the updated target plan to the determination module. The determination module repeats execution of the fourth operation through determination technology and based on the execution result corresponding to the updated target plan. As shown in FIG. 4, it is first determined whether there are untraversed nodes. Currently, there are candidate nodes in the candidate node set of (i+1) levels in the tree of thought. As long as there are untraversed candidate nodes (that is, unexecuted candidate plans) in the candidate node set of (i+1) levels, a tree-of-thought pruning operation may be performed. Then the determination module may send a quality evaluation result to the tree-of-thought decision generation module. The tree-of-thought decision generation module reselects a candidate node based on the scores of the candidate nodes in the candidate node set of (i+1) levels to update a target plan, and repeats execution of the above steps based on the updated target plan. If there are no untraversed candidate nodes, it may be determined that no answer can be found.

For details of the tree-of-thought pruning process, reference may be made to the example shown in FIG. 4. First, pruning is performed, that is, failed nodes in the tree of thought are deleted. In the embodiments of the present application, if, after executing the (i+1)-th plan, the determination module determines that the target plan (that is, the first i+1 plans) does not meet quality requirements, the node corresponding to the (i+1)-th plan is a failed node in the tree of thought. Then, traversal starts from a node at the last level in the tree of thought, and a new plan is output. Specifically, it is determined whether the search is completed (that is, whether nodes at all levels have been searched). If yes, it is determined that the search cannot continue and no answer can be found; if no, nodes at the k-th level are searched, and it is determined whether there are untraversed nodes among nodes at the k-th level in the tree of thought, where k is initially M, M is the number of levels included in the tree of thought, and M is a positive integer.

If there are no untraversed nodes in the nodes at the k-th level in the tree of thought, k is updated to k-1, and the operations of pruning and searching the nodes at the k-th level continue; and if there is an untraversed node in the nodes at the k-th level, a plan corresponding to the untraversed node in the untraversed nodes at the k-th level is output.

Then, the plan corresponding to the untraversed node is input to the tree-of-thought decision generation module to update the tree of thought, and the tree-of-thought decision generation module and the ReAct tool agent module continue to output and execute plans. For details of this process, reference may be made to the relevant description above.

As shown in FIG. 4, in the solution of the embodiments of the present application, tree-of-thought technology is introduced into the ReAct framework. By combining plan backtracking, multi-path exploration, dynamic adjustment and optimization, multi-tool collaborative work, and a feedback-based error correction mechanism, the flexibility, accuracy, and stability of responses of an intelligent customer service system can be significantly improved.

The solution of the embodiments of the present application is further described below under the process framework of the example shown in FIG. 4.

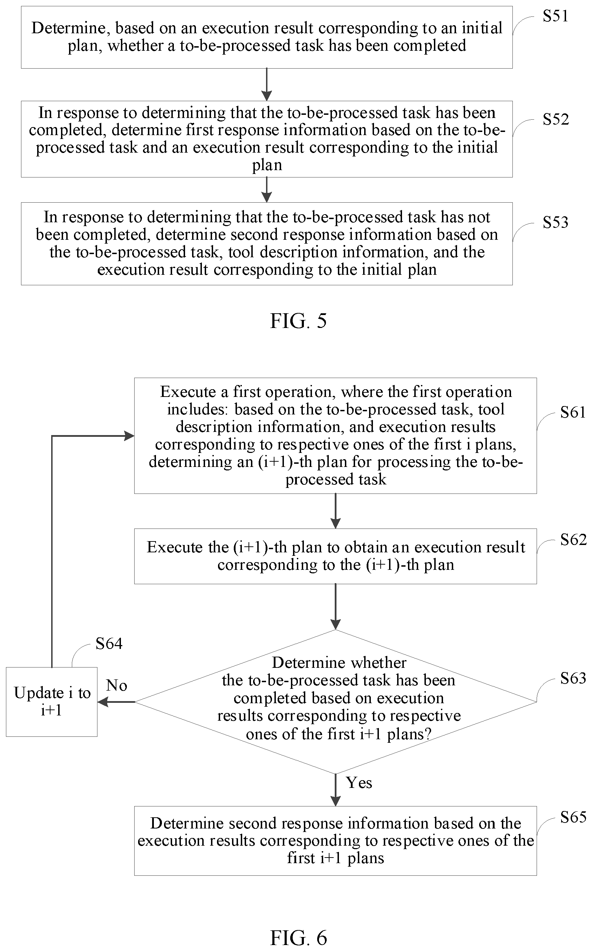

FIG. 5 is a flowchart of determining response information for a to-be-processed task according to embodiments of the present application. As shown in FIG. 5, the following steps are included.

S51: determining, based on an execution result corresponding to an initial plan, whether a to-be-processed task has been completed.

S51 involves determining the completeness of execution of the to-be-processed task. For example, if completing the to-be-processed task requires three steps A, B, and C, and the initial plan only completes step A and obtains an execution result of step A, then it may be determined that the to-be-processed task is not completed. For example, if completing the to-be-processed task only requires step A, and the initial plan completes step A and obtains the execution result of step A, it may be determined, based on the to-be-processed task and the execution result of step A, that the to-be-processed task has been completed. Then, a large language model outputs final response information based on the execution result.

In a possible implementation, the server may convert the execution result corresponding to the initial plan and the to-be-processed task into a corresponding prompt and input the corresponding prompt into a large language model, and the large language model outputs a determination result, where the determination result indicates whether the to-be-processed task has been completed.

In an example in which the to-be-processed task is "help me set up networking", the initial plan is "to set up networking, first create a project", and the execution result corresponding to the initial plan is "project creation completed", the prompt input to the large language model may be, for example:
"To-be-processed task: help me set up networking;
Execution result corresponding to the initial plan: project creation completed;
Determine whether the to-be-processed task has been completed."

Then, the large language model outputs "the to-be-processed task has not been completed yet", and the server may determine that the to-be-processed task is not completed.

S52: when the to-be-processed task is determined to have been completed, determining first response information based on the to-be-processed task and the execution result corresponding to the initial plan.

In a possible implementation, the execution result corresponding to the initial plan may be directly determined as the first response information.

In a possible implementation, quality evaluation may be performed on the execution result corresponding to the initial plan based on the to-be-processed task, to determine whether the initial plan meets quality requirements. If the initial plan meets the quality requirements, the execution result corresponding to the initial plan is determined as the first response information. If the initial plan does not meet the quality requirements, a new initial plan may be selected from the first candidate plan set, then the new initial plan is executed, and the first response information is determined based on the execution result corresponding to the new initial plan. For example, in the example of FIG. 3, plan A, plan B, and plan C are generated in advance. Since plan B has the highest score, plan B is determined as the initial plan and executed. If plan B does not meet the quality requirements, the server may determine plan A as the new initial plan, execute plan A to obtain an execution result corresponding to plan A, and determine the first response information based on the execution result corresponding to plan A.

It should be noted that if it is determined, based on the execution result corresponding to the new initial plan, that the to-be-processed task is not completed, a next plan needs to be generated based on the new initial plan and executed. For details of this process, reference may be made to the relevant description of S53 in the following embodiments, and details thereof are not described here. If it is determined, based on the execution result corresponding to the new initial plan, that the to-be-processed task has been completed, the execution result corresponding to the new initial plan may be directly determined as the first response information, or the first response information may be determined based on whether the new initial plan meets the quality requirements. For details of this process, reference may be made to the relevant description in S52.

S53: when the to-be-processed task is determined not to have been completed, determining second response information based on the to-be-processed task, the tool description information, and the execution result corresponding to the initial plan.

When the to-be-processed task has not been completed, a new plan needs to be further generated based on the initial plan. This process is described below with reference to FIG. 6.

FIG. 6 is a flowchart of determining response information according to embodiments of the present application. As shown in FIG. 6, the following steps are included.

S61: executing a first operation, where the first operation includes determining an (i+1)-th plan for processing the to-be-processed task based on the to-be-processed task, the tool description information, and execution results corresponding to respective ones of the first i plans.

i is initially 1, and i is a positive integer greater than or equal to 1. The first operation may specifically include the following steps (a) - (c).

(a) Generating an (i+1)-th candidate plan set based on the to-be-processed task, the tool description information, and execution results corresponding to respective ones of the first i plans, where the (i+1)-th candidate plan set includes at least one candidate plan.

In a possible implementation, the server may convert the to-be-processed task, the tool description information, and execution results corresponding to respective ones of the first i plans into a corresponding prompt and input the corresponding prompt into a large language model, and the large language model outputs an (i+1)-th candidate plan set, where the (i+1)-th candidate plan set includes at least one candidate plan.

(b) Determining scores for respective candidate plans in the (i+1)-th candidate plan set based on candidate plan evaluation parameters.

The candidate plan evaluation parameters are configured to indicate the criteria for scoring candidate plans. The criteria for scoring may include, for example, dimensions such as feasibility, efficiency, and resource utilization of a candidate plan, that is, the candidate plan evaluation parameters may include, for example, feasibility, efficiency, resource utilization, and the like of the candidate plan.

In a possible implementation, for any candidate plan in the (i+1)-th candidate plan set, the server obtains a score of the candidate plan based on at least one of the scores of the candidate plan under dimensions of scoring criteria (which may include, for example, feasibility score, efficiency score, and resource utilization score).

For example, the score of the candidate plan may be obtained by averaging a feasibility score, an efficiency score, and a resource utilization score of the candidate plan. For example, different weights may be set for the feasibility score, the efficiency score, and the resource utilization score, and the score of the candidate plan may be determined based on the feasibility score, the efficiency score, and the resource utilization of the candidate plan and corresponding weights of the feasibility score, the efficiency score, and the resource utilization score.

In a possible implementation, for any candidate plan in the (i+1)-th candidate plan set, the server may convert the candidate plan and the candidate plan evaluation parameters into a corresponding prompt and input the corresponding prompt into a large language model, and the large language model outputs the score of the candidate plan.

In an example in which the to-be-processed task is "help me set up networking" and the candidate plan is "consult the user's demand scenario", the prompt input to the large language model may be, for example:
"To-be-processed task: help me set up networking;
Candidate plan: consult the user's demand scenario;
Score the candidate plan from dimensions such as feasibility, efficiency, and resource utilization."

Then, the large language model outputs "the score value of the candidate plan is 9", and the server may determine that the score of the candidate plan is 9.

(c) Determining an (i+1)-th plan in the (i+1)-th candidate plan set based on scores of respective candidate plans in the (i+1)-th candidate plan set.

After obtaining the scores of the respective candidate plans in the (i+1)-th candidate plan set, the server may determine a candidate plan with a highest score as the (i+1)-th plan, or determine a candidate plan with a second highest score as the (i+1)-th plan, and so on.

S62: executing the (i+1)-th plan to obtain an execution result corresponding to the (i+1)-th plan.

After determining the (i+1)-th plan, the server needs to select an appropriate tool to execute the (i+1)-th plan.

Execution of the (i+1)-th plan may specifically include the following steps (d) - (e).

(d) Determining, based on the (i+1)-th plan, tool description information, the to-be-processed task, and execution results corresponding to respective ones of the first i plans, a target tool for executing the (i+1)-th plan and input parameters of the target tool.

The execution results corresponding to respective ones of the first i plans are historical execution information, and the (i+1)-th plan is a plan executed based on the first i plans.

In a possible implementation, based on the (i+1)-th plan, the tool description information, the to-be-processed task, and the execution results corresponding to respective ones of the first i plans, the server may output a thinking process of executing the (i+1)-th plan.

Specifically, the server may convert the (i+1)-th plan, the tool description information, the to-be-processed task, and execution results corresponding to respective ones of the first i plans into a corresponding prompt and input the corresponding prompt into a large language model, and the large language model outputs the thinking process of executing the (i+1)-th plan.

Step (d) is the process of selecting an appropriate tool for the (i+1)-th plan. The execution information corresponding to the (i+1)-th plan indicates how to execute the (i+1)-th plan, and different execution manners require different tools.

For example, if the (i+1)-th plan is to consult the user's demand scenario, and the thinking process of executing the (i+1)-th plan indicates determining the demand scenario by querying the user, the required tool includes a user tool. If the thinking process of executing the (i+1)-th plan indicates that the demand scenario is to be determined by requesting assistance from a human customer service agent, the required tool includes an expert tool, and so on.

In a possible implementation, the server may convert the thinking process of executing the (i+1)-th plan, the (i+1)-th plan, the tool description information, the to-be-processed task, and execution results corresponding to respective ones of the first i plans into a corresponding prompt and input the corresponding prompt into a large language model, and the large language model outputs the name of the target tool.

Then, the server may convert the thinking process of executing the (i+1)-th plan, the (i+1)-th plan, the tool description information, the to-be-processed task, execution results corresponding to respective ones of the first i plans, and the name of the target tool into a corresponding prompt and input the corresponding prompt into a large language model, and the large language model outputs input parameters of the target tool, where the input parameters of the target tool are used to invoke the target tool.

(e) Executing the (i+1)-th plan based on the target tool and the input parameters of the target tool to obtain an execution result corresponding to the (i+1)-th plan.

After the input parameters of the target tool are determined, the target tool may be invoked via the input parameters of the target tool, the target tool processes the input parameters, executes the (i+1)-th plan, and obtains the execution result corresponding to the (i+1)-th plan.

For example, if the (i+1)-th plan is to consult the user's demand scenario, the target tool is a user tool, and the input parameters are the follow-up question "what is your demand scenario", then the server invokes the user tool via the output parameters, causing a frontend to output the follow-up question to the user. After the user answers, an execution result corresponding to the (i+1)-th plan is obtained based on the user's answer.

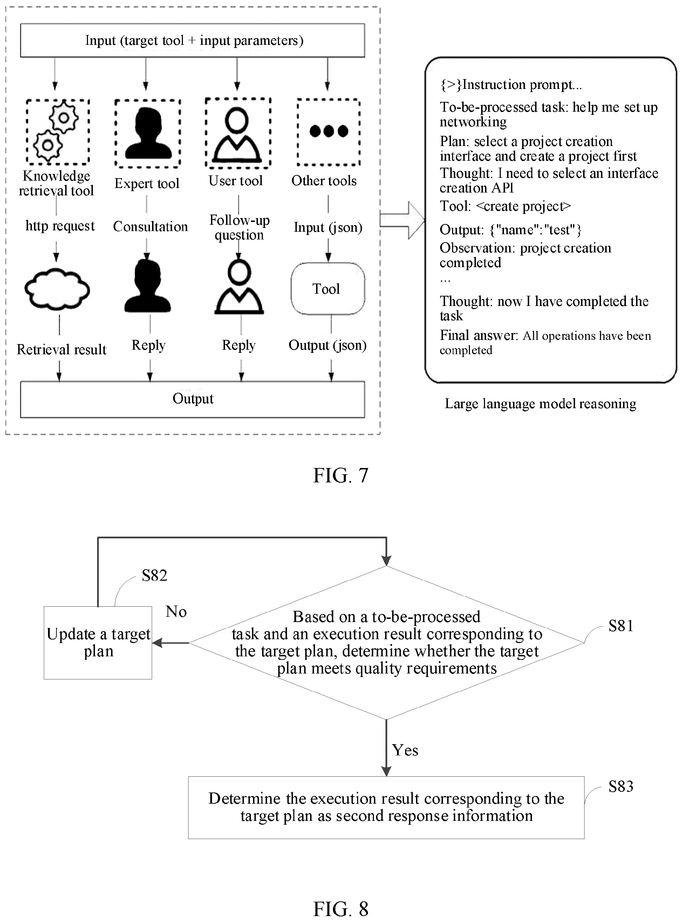

This process may be understood with reference to FIG. 7. FIG. 7 is a schematic diagram of a tool invocation process and large language model reasoning according to embodiments of the present application. As shown in FIG. 7, the to-be-processed task is "help me set up networking", the plan is "select a project creation interface, and create a project first", ReAct performs thinking "I need to select an interface creation API", determines a target tool, invokes the tool to execute the plan, and completes project creation, and the final answer is "All operations have been completed".

As shown in the left part of FIG. 7, for a knowledge retrieval tool, the input parameter may be, for example, a knowledge query to be retrieved, and retrieved article content is returned through invocation of an underlying API interface; for an expert tool, the input parameter is a consultation question, and the output parameter is an expert's reply; for a user tool, the input parameter is a follow-up question to the user, and the output parameter is a user's reply; and for other tools, there are also corresponding inputs and outputs. As shown in FIG. 7, the data format of inputs and outputs may be json.

S63: determining, based on the execution results corresponding to respective ones of the first i+1 plans, whether the to-be-processed task is completed; where if no, S64 is executed; otherwise, S65 is executed.

After obtaining the (i+1)-th plan, the server may determine, based on the execution results corresponding to respective ones of the first i+1 plans, whether the to-be-processed task is completed. Specifically, the server may convert the execution results corresponding to respective ones of the first i+1 plans and the to-be-processed task into a corresponding prompt and input the corresponding prompt into a large language model, and the large language model outputs a determination result, where the determination result indicates whether the to-be-processed task has been completed. For the implementation of this process, reference may be made to the implementation in the above embodiments in which the execution result corresponding to the initial plan and the to-be-processed task are converted into a corresponding prompt, then the corresponding prompt is input into a large language model, and the large language model outputs a determination result, and details are not described herein again.

S64: updating i to i+1, and executing S61.

When the to-be-processed task is determined not to have been completed based on execution results corresponding to respective ones of the first i+1 plans, the server updates i to i+1 and repeats execution of the first operation.

In the embodiments of the present application, the first plan is the initial plan. If it is determined, based on the execution result corresponding to the initial plan, that the to-be-processed task is not completed, the first operation needs to be executed to generate a second plan, and the second plan is executed. Whether the to-be-processed task is completed is determined based on an execution result corresponding to the second plan, and so on. If it is determined, based on execution results corresponding to respective ones of the first i+1 plans, that the to-be-processed task is not completed, the first operation needs to continue to generate a next plan until the to-be-processed task is completed.

S65: determining second response information based on the execution results corresponding to respective ones of the first i+1 plans.

When the to-be-processed task is determined to have been completed based on the execution results corresponding to respective ones of the first i+1 plans, the server determines the second response information based on the execution results corresponding to respective ones of the first i+1 plans. This process is described below with reference to FIG. 8.

FIG. 8 is a flowchart of determining response information according to embodiments of the present application. As shown in FIG. 8, the following steps are included.

S81: determining, based on the to-be-processed task and an execution result corresponding to a target plan, whether a target plan meets quality requirements; where if no, S82 is executed; otherwise, S83 is executed.

Initially, the target plan initially includes first i+1 plans, and the execution result corresponding to the target plan initially includes execution results corresponding to respective ones of the first i+1 plans.

The server may convert the to-be-processed task and the execution result corresponding to the target plan into a corresponding prompt and input the corresponding prompt into a large language model, and the large language model outputs a quality evaluation result, where the quality evaluation result is configured to indicate whether the target plan meets the quality requirements, that is, whether the execution result corresponding to the target plan can resolve the to-be-processed task.

Determining whether the target plan meets the quality requirements mainly involves determining whether the execution results corresponding to respective plans in the target plan can match the to-be-processed task, and whether there are issues such as irrelevant answers.

In one implementation, if the to-be-processed task is "help me set up networking", the prompt may be, for example:
"To-be-processed task: help me set up networking;
Execution result corresponding to plan 1: consultation on the user's demand scenario has been completed;
Execution result corresponding to plan 2: a project interface has been successfully created;
   ...

Execution result corresponding to plan (i+1): based on the user's demand scenario and the created project interface, the networking setup task has been completed;

Output a quality evaluation result based on the above information, in the format of True/False (choose one of the two)."

"True" indicates that the target plan meets the quality requirements, that is, the execution result corresponding to the target plan can resolve the to-be-processed task, and "False" indicates that the target plan does not meet the quality requirements, that is, the execution result corresponding to the target plan cannot resolve the to-be-processed task.

In one implementation, if the to-be-processed task is "help me set up networking", the prompt may be, for example:
"To-be-processed task: help me set up networking;
Execution result corresponding to plan 1: consultation on the user's demand scenario has been completed;
Execution result corresponding to plan 2: a project interface has been successfully created;
   ...

Execution result corresponding to plan (i+1): based on the user's demand scenario and the created project interface, the networking setup task has been completed;

Output a matching score between the target plan and the to-be-processed task based on the above information."

The above prompt is input into the large language model, and the large language model may output a matching score between the target plan and the to-be-processed task. The matching score is then compared with a preset matching threshold. If the matching score between the target plan and the to-be-processed task is greater than or equal to the preset matching threshold, it is determined that the target plan meets the quality requirements; if the matching score between the target plan and the to-be-processed task is less than the preset matching threshold, it is determined that the target plan does not meet the quality requirements.

S82: updating the target plan.

If the target plan does not meet the quality requirements, it indicates that quality of the execution result corresponding to the target plan is insufficient to resolve the user's problem, and the to-be-processed task may not be well completed. In one implementation, when the quality evaluation result of the target plan output by the large language model is False, it is determined that the target plan does not meet the quality requirements. In one implementation, when the matching score between the target plan and the to-be-processed task output by the large language model is less than the preset matching threshold, it is determined that the target plan does not meet the quality requirements.

Therefore, when the target plan does not meet the quality requirements, the server updates the target plan to obtain an updated target plan.

Specifically, the server determines a candidate plan set corresponding to a j-th plan in candidate plan sets corresponding to the first i+1 plans, where an unexecuted candidate plan exists in the candidate plan set corresponding to the j-th plan, and j is a positive integer less than or equal to i+1.

Then, the server determines a target candidate plan in the unexecuted candidate plans based on the scores of the unexecuted candidate plans. Optionally, the target candidate plan is a candidate plan with a highest score among the unexecuted candidate plans in the candidate plan set corresponding to the j-th plan.

Finally, the server updates the target plan based on the target candidate plan to obtain an updated target plan. The updated target plan includes at least the first j-1 plans and the target candidate plan, that is, the server determines the target candidate plan as a new j-th plan and deletes the original j-th plan. The server may determine whether the to-be-processed task has been completed after executing the first j-1 plans and the target candidate plan. If yes, the updated target plan includes the first j-1 plans and the target candidate plan. If no, a new candidate plan set needs to be further generated based on the target candidate plan, the to-be-processed task, the tool description information, and execution results corresponding to respective ones of the first j-1 plans and the target candidate plan, until the to-be-processed task is finally completed and the updated target plan is obtained. The manner of generating a new candidate plan set based on the to-be-processed task, the tool description information, and execution results corresponding to respective ones of the first j-1 plans and the target candidate plan is similar to the implementation in the above embodiments of generating the (i+1)-th candidate plan set based on the to-be-processed task, the tool description information, and execution results corresponding to respective ones of the first i plans. For the specific implementation, reference may be made to the relevant description in the above embodiments, and details are not described herein again.

After the updated target plan is determined, the second operation may be repeatedly executed based on the execution result corresponding to the updated target plan until the target plan finally meets the quality requirements.

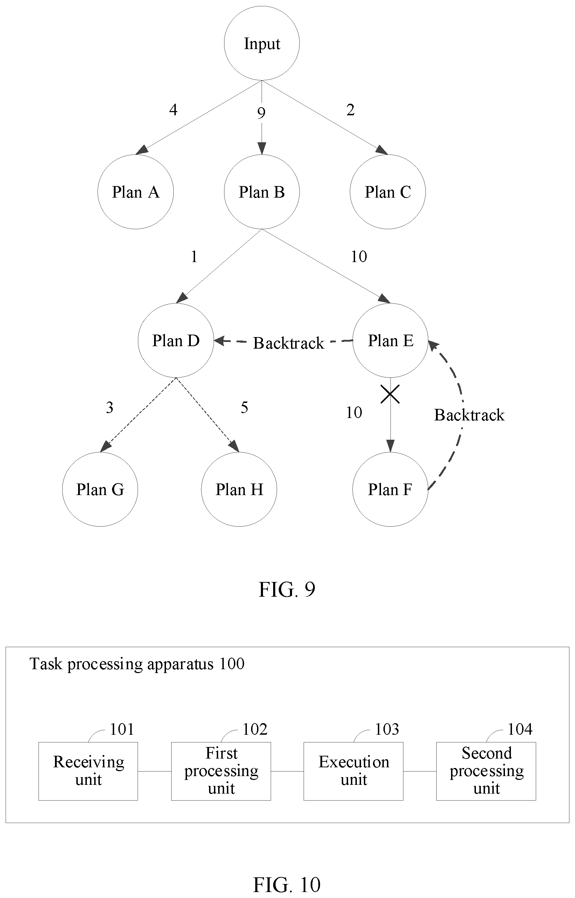

This process may be understood, for example, with reference to FIG. 9. FIG. 9 is a schematic diagram of updating a target plan according to embodiments of the present application. As shown in FIG. 9, a prompt exemplifies generated plans and corresponding scores. For example, in FIG. 9, plan A is "to set up networking, a project should be created first", the score of plan A is 4, plan B is "to set up networking, a user's demand scenario should be queried first", the score of plan B is 9, and so on.

As shown in the tree-of-thought example in FIG. 9, the server first generates a first candidate plan set based on the to-be-processed task and the tool description information. The first candidate plan set includes plan A, plan B, and plan C, with scores of the respective plans shown in FIG. 9. The first candidate plan set corresponds to a first level in the tree of thought, and the first level includes nodes corresponding to plan A, plan B, and plan C, respectively. Since plan B has the highest score, plan B is determined as an initial plan, and plan B is executed to obtain an execution result corresponding to plan B.

Then, based on the execution result corresponding to plan B, it is determined that the to-be-processed task is not completed. Accordingly, a second candidate plan set is further generated, and the second candidate plan set includes plan D and plan E, where the second candidate plan set corresponds to a second level in the tree of thought, and the second level includes nodes corresponding to plan D and plan E, respectively. Plan D has a score of 1, and plan E has a score of 10. Therefore, the server may determine plan E as a second plan and execute plan E to obtain an execution result corresponding to plan E.

Then, based on the execution results corresponding to plan B and plan E, it is determined that the to-be-processed task is not completed. Accordingly, a third candidate plan set is further generated, and the third candidate plan set includes plan F, where the third candidate plan set corresponds to a third level in the tree of thought, and the third level includes a node corresponding to plan F. Therefore, the server may determine plan F as a third plan and execute plan F to obtain an execution result corresponding to plan F.

If, after execution of plan F, it is determined that the to-be-processed plan has been completed, a target plan at this point includes plan B, plan E, and plan F. Then, it is necessary to determine, based on the execution results of plan B, plan E, and plan F, whether the target plan meets quality requirements (that is, whether the user's problem can be resolved). If the target plan meets the quality requirements, response information may be determined based on the execution results of plan B, plan E, and plan F. If the target plan does not meet the quality requirements, the target plan needs to be updated.

As shown in FIG. 9, plan F may be first pruned from the tree of thought (plan F is the currently executed (i+1)-th plan, and based on the first i+1 plans, it may be determined that the plan does not meet the quality requirements. Accordingly, plan F may be pruned in this case). The tree of thought still includes nodes corresponding to plan A, plan B, plan C, plan D, and plan E. Backtracking is performed from plan F to plan E, then from plan E to plan D. Plan D is an unexecuted candidate plan in the candidate plan set corresponding to plan E, and therefore, plan D may be determined as a new second plan, and the first plan in this case includes at least plan B and plan D. If it is determined, based on the execution results corresponding to plan B and plan D, that the to-be-processed task is not completed, a next plan needs to be further generated based on plan D until the to-be-processed task is completed. For example, in FIG. 9, plan G and plan H are further generated based on plan D. For this process, reference may be made to the relevant description in the above embodiments, and details are not described herein again. If it is determined, based on execution results corresponding to plan B and plan D, that the to-be-processed task has been completed, the new target plan includes plan B and plan D, then whether the new target plan meets the quality requirements is determined, and response information is determined based on whether the new target plan meets the quality requirements. For this process, reference may be made to the relevant description in the above embodiments, and details are not described herein again.

S83: determining an execution result corresponding to the target plan as second response information.

When the target plan meets the quality requirements, the server determines the execution result corresponding to the target plan as the second response information.

In summary, in the solutions of embodiments of the present application, for the to-be-processed task, tools required for an initial plan may be determined in combination with tool description information, and system tools are flexibly invoked to execute the initial plan. When it is determined, based on the execution result corresponding to the initial plan, that the to-be-processed task is not completed, new paths are explored and a next plan is generated until the target plan is obtained. Further, whether the target plan meets the quality requirements is determined through quality evaluation. When the target plan does not meet the quality requirements, the target plan is updated until the target plan meets the quality requirements, after which response information is output. Through the above exploration of paths and updating of the target plan, the flexibility, accuracy, and stability of responses can be improved, thereby improving the quality of response information.

FIG. 10 is a structural schematic diagram of a task processing apparatus according to embodiments of the present application. As shown in FIG. 10, the task processing apparatus 100 includes:
a receiving unit 101 configured to receive an input to-be-processed task;
a first processing unit 102 configured to determine, based on the to-be-processed task and tool description information, an initial plan for processing the to-be-processed task, where the initial plan includes an initial step for processing the to-be-processed task and tools required for the initial plan;
an execution unit 103 configured to execute the initial plan based on the initial step and the tools required for the initial plan to obtain an execution result corresponding to the initial plan; and
a second processing unit 104 configured to determine response information for the to-be-processed task based on the execution result corresponding to the initial plan.

In a possible implementation, the first processing unit 102 is specifically configured to:
generate a first candidate plan set based on the to-be-processed task and the tool description information, where the first candidate plan set includes at least one candidate plan;
determine scores for the respective candidate plans in the first candidate plan set based on candidate plan evaluation parameters; and
determine the initial plan in the first candidate plan set based on the scores of the respective candidate plans in the first candidate plan set.

In a possible implementation, the second processing unit 104 is specifically configured to:
determine, based on the execution result corresponding to the initial plan, whether the to-be-processed task has been completed;
when the to-be-processed task is determined to have been completed, determine first response information based on the to-be-processed task and the execution result corresponding to the initial plan; and
when the to-be-processed task is determined not to have been completed, determine second response information based on the to-be-processed task, the tool description information, and the execution result corresponding to the initial plan.

In a possible implementation, the second processing unit 104 is specifically configured to:
execute a first operation, where the first operation includes: determining an (i+1)-th plan for processing the to-be-processed task based on the to-be-processed task, the tool description information, and execution results corresponding to respective ones of the first i plans; and execute the (i+1)-th plan to obtain an execution result corresponding to the (i+1)-th plan; where i is initially 1, and i is a positive integer greater than or equal to 1;
when the to-be-processed task is determined not to have been completed based on execution results corresponding to respective ones of the first i+1 plans, update i to i+1, and repeat execution of the first operation; and
when the to-be-processed task is determined to have been completed based on the execution results corresponding to respective ones of the first i+1 plans, determine the second response information based on the execution results corresponding to respective ones of the first i+1 plans.

In a possible implementation, the second processing unit 104 is specifically configured to:
generate an (i+1)-th candidate plan set based on the to-be-processed task, the tool description information, and the execution results corresponding to respective ones of the first i plans, where the (i+1)-th candidate plan set includes at least one candidate plan;
determine scores for the respective candidate plans in the (i+1)-th candidate plan set based on candidate plan evaluation parameters; and
determine the (i+1)-th plan in the (i+1)-th candidate plan set based on the scores of the respective candidate plans in the (i+1)-th candidate plan set.

In a possible implementation, the second processing unit 104 is specifically configured to:
determine, based on the (i+1)-th plan, the tool description information, the to-be-processed task, and the execution results corresponding to respective ones of the first i plans, a target tool for executing the (i+1)-th plan and input parameters of the target tool; and
execute the (i+1)-th plan based on the target tool and the input parameters of the target tool to obtain the execution result corresponding to the (i+1)-th plan.

In a possible implementation, the second processing unit 104 is specifically configured to:
execute a second operation, where the second operation includes determining, based on the to-be-processed task and an execution result corresponding to a target plan, whether the target plan meets quality requirements; the target plan initially includes the first i+1 plans, and the execution result corresponding to the target plan initially includes the execution results corresponding to respective ones of the first i+1 plans; and
when the target plan meets the quality requirements, determine the second response information based on the execution result corresponding to the target plan.

In a possible implementation, the second processing unit 104 is further configured to:
when the target plan does not meet the quality requirements, update the target plan to obtain an updated target plan; and
repeat execution of the second operation based on the execution result corresponding to the updated target plan.

In a possible implementation, the second processing unit 104 is specifically configured to:
determine a candidate plan set corresponding to a j-th plan in candidate plan sets corresponding to the first i+1 plans, where an unexecuted candidate plan exists in the candidate plan set corresponding to the j-th plan, and j is a positive integer less than or equal to i+1;
determine a target candidate plan in the unexecuted candidate plans based on scores of the unexecuted candidate plans; and
update the target plan based on the target candidate plan to obtain the updated target plan.

In a possible implementation, the first processing unit 102 is specifically configured to:
generate a candidate node set of a first level in a tree of thought through tree-of-thought technology and based on the to-be-processed task and the tool description information, where each candidate node in the candidate node set of the first level corresponds to a candidate plan;
determine scores for the candidate nodes in the candidate node set of the first level based on candidate plan evaluation parameters; and
determine a target node at the first level in the candidate node set of the first level based on the scores of the candidate nodes in the candidate node set of the first level, and determine the candidate plan corresponding to the target node at the first level as the initial plan.

In a possible implementation, the second processing unit 104 is specifically configured to:
determine, through tool agent technology and based on the execution result corresponding to the initial plan, whether the to-be-processed task has been completed;
when the to-be-processed task is determined to have been completed, determine the first response information through determination technology and based on the to-be-processed task and the execution result corresponding to the initial plan; and
when the to-be-processed task is determined not to have been completed, determine second response information through the tree-of-thought technology and the tool agent technology and based on the to-be-processed task, the tool description information, and the execution result corresponding to the initial plan.

In a possible implementation, the second processing unit 104 is specifically configured to:
execute a third operation, where the third operation includes: determining an (i+1)-th plan for processing the to-be-processed task through the tree-of-thought technology and based on the to-be-processed task, the tool description information, and execution results corresponding to respective ones of the first i plans; and executing the (i+1)-th plan through the tool agent technology to obtain an execution result corresponding to the (i+1)-th plan; where i is initially 1, and i is a positive integer greater than or equal to 1;
when it is determined through the tool agent technology and based on execution results corresponding to respective ones of the first i+1 plans that the to-be-processed task has not been completed, update i to i+1, and repeat execution of the third operation; and
when it is determined through the tool agent technology and based on execution results corresponding to respective ones of the first i+1 plans that the to-be-processed task has been completed, determine the second response information through determination technology and based on the execution results corresponding to respective ones of the first i+1 plans.

In a possible implementation, the second processing unit 104 is specifically configured to:
generate a candidate node set of an (i+1)-th level through the tree-of-thought technology and based on the to-be-processed task, the tool description information, and the execution results corresponding to respective ones of the first i plans, where each candidate node in the candidate node set of the (i+1)-th level corresponds to a candidate plan;
determine scores for the candidate nodes in the candidate node set of the (i+1)-th level based on candidate plan evaluation parameters; and
determine a target node at the (i+1)-th level in the candidate node set of the (i+1)-th level based on the scores of the candidate nodes in the candidate node set of the (i+1)-th level, and determine the candidate plan corresponding to the target node at the (i+1)-th level as the (i+1)-th plan.

In a possible implementation, the second processing unit 104 is specifically configured to:
determine, through the tool agent technology and based on the (i+1)-th plan, the tool description information, the to-be-processed task, and the execution results corresponding to respective ones of the first i plans, a target tool for executing the (i+1)-th plan and input parameters of the target tool; and
execute the (i+1)-th plan through the tool agent technology and based on the target tool and the input parameters of the target tool to obtain the execution result corresponding to the (i+1)-th plan.

In a possible implementation, the second processing unit 104 is specifically configured to:
execute a fourth operation, where the fourth operation includes determining, through the determination technology and based on the to-be-processed task and an execution result corresponding to a target plan, whether the target plan meets quality requirements; the target plan initially includes the first i+1 plans, and the execution result corresponding to the target plan initially includes the execution results corresponding to respective ones of the first i+1 plans; and
when the target plan meets the quality requirements, determine the second response information based on the execution result corresponding to the target plan.

In a possible implementation, the second processing unit 104 is further configured to:
when the target plan does not meet the quality requirements, update the target plan through the tree-of-thought technology to obtain an updated target plan; and
repeat execution of the fourth operation through the determination technology and based on the execution result corresponding to the updated target plan.

The task processing apparatus provided in the embodiments of the present application is configured to execute the above method embodiments, with similar implementation principles and technical effects, and details are not described again in this embodiment.

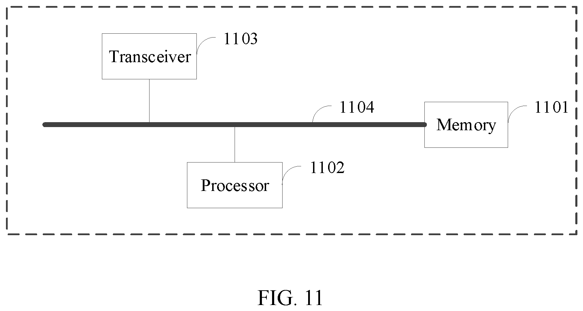

FIG. 11 is a structural schematic diagram of a task processing device according to embodiments of the present application. As shown in FIG. 11, the task processing device includes: a memory 1101, a processor 1102, and a transceiver 1103.

The memory 1101 is configured to store program instructions.

The processor 1102 is configured to execute the program instructions stored in the memory, so that the task processing device executes steps of the method in the above embodiments.

The transceiver 1103 may include a transmitter and/or a receiver. The transmitter may also be referred to as a sender, transmitter, sending port, or sending interface, or the like, and the receiver may also be referred to as a receiver, receiving port, or receiving interface, or the like. By way of example, the memory 1101, the processor 1102, and the transceiver 1103 are connected to each other through a bus 1104.

The implementation of all or part of the steps in the above method embodiments may be completed by a program instructing relevant hardware. The program may be stored on a readable memory. When the program is being executed, the steps of the above method embodiments may be performed. The memory (or storage medium) may include: read-only memory (ROM), RAM, flash memory, hard disk, solid-state drive, magnetic tape (magnetic tape), floppy disk (floppy disk), optical disc (optical disc), and any combination thereof.

Embodiments of the present application provide a computer-readable storage medium, where computer executable instructions are stored in the computer-readable storage medium, and when executed by a processor, the computer executable instructions are configured to implement steps of the method in the above method embodiments.

Embodiments of the present application further provide a computer program product, including a computer program, where the computer program is executed by a processor, steps of the method in the above method embodiments may be implemented.

These computer program instructions may alternatively be stored in a computer-readable memory that can direct a computer or other programmable data processing device to operate in a specific manner, so that the instructions stored in the computer-readable memory produce an article of manufacture including an instruction apparatus, where the instruction apparatus implements functions specified in one or more processes in a flowchart and/or one or more blocks in a block diagram.

These computer program instructions may alternatively be loaded onto a computer or other programmable data processing device, so that a series of operational steps are executed on the computer or other programmable device to produce computer-implemented processing, thus the instructions executed on the computer or other programmable device provide steps for implementing the functions specified in one or more processes in the flowchart or one or more blocks in the block diagram.

In the several embodiments provided in the present application, it should be understood that the disclosed systems, apparatuses, and methods may be implemented in other manners. For example, the described apparatus embodiments are merely illustrative. For example, the division of units is merely logical functional division, and there may be other division manners in actual implementation. For example, a plurality of units or components may be combined or integrated into another system, or some features may be ignored or not executed. In addition, the displayed or discussed mutual couplings or direct couplings or communication connections may be indirect couplings or communication connections through some interfaces, and the indirect couplings or communication connections between apparatuses or units may be in electrical, mechanical, or other forms.

The units described as separate components may or may not be physically separated, and the components displayed as units may or may not be physical units, that is, they may be located in one position or distributed on a plurality of network units. Some or all of the units may be selected according to actual needs to achieve the objectives of the solutions of the embodiments.

In addition, functional units in the embodiments of the present application may be integrated into one processing unit, or each of the functional units may exist alone physically, or two or more units are integrated into one unit. The integrated units may be implemented in a form of hardware, or may be implemented in a form of a software functional unit.

Those of ordinary skill in the art may understand that all or some of the steps for implementing the above method embodiments may be implemented by hardware related to program instructions. The foregoing computer program may be stored in a computer-readable storage medium. When executed by a processor, the computer program implements the steps including the above method embodiments; and the foregoing storage medium includes: ROM, RAM, magnetic disk, or optical disc, and various media that can store program codes.

Finally, it should be noted that the above embodiments are merely intended to illustrate the technical solutions of the present application, rather than to limit them. Although the present application has been described in detail with reference to the foregoing embodiments, those of ordinary skill in the art should understand that they can still make modifications to the technical solutions recorded in the foregoing embodiments, or make equivalent substitutions to some or all of the technical features of the technical solutions; however, these modifications or substitutions do not make the essence of the corresponding technical solutions depart from the scope of the technical solutions of the embodiments of the present application.

## Claims

1. A task processing method, comprising:
receiving an input to-be-processed task;
determining, based on the to-be-processed task and tool description information, an initial plan for processing the to-be-processed task, wherein the initial plan comprises an initial step for processing the to-be-processed task and tools required for the initial plan;
executing the initial plan based on the initial step and the tools required for the initial plan to obtain an execution result corresponding to the initial plan; and
determining response information for the to-be-processed task based on the execution result corresponding to the initial plan.

2. The method according to claim 1, wherein the determining, based on the to-be-processed task and tool description information, the initial plan for processing the to-be-processed task comprises:
generating a first candidate plan set based on the to-be-processed task and the tool description information, wherein the first candidate plan set comprises one or more candidate plans;
determining scores for the one or more candidate plans in the first candidate plan set based on candidate plan evaluation parameters; and
determining the initial plan based on the scores of the one or more candidate plans in the first candidate plan set.

3. The method according to claim 1 or 2, wherein the determining, based on the to-be-processed task and tool description information, the initial plan for processing the to-be-processed task comprises:
parsing the to-be-processed task to determine initial steps required for processing the to-be-processed task; and
determining tools required for executing the initial step based on the tool description information.

4. The method according to any one of claims 1 to 3, wherein the determining the response information for the to-be-processed task based on the execution result corresponding to the initial plan comprises:
determining, based on the execution result corresponding to the initial plan, whether the to-be-processed task has been completed;
when the to-be-processed task is determined to have been completed, determining first response information based on the to-be-processed task and the execution result corresponding to the initial plan; and
when the to-be-processed task is determined not to have been completed, determining second response information based on the to-be-processed task, the tool description information, and the execution result corresponding to the initial plan.

5. The method according to claim 4, wherein the determining the second response information based on the to-be-processed task, the tool description information, and the execution result corresponding to the initial plan comprises:
executing a first operation, wherein the first operation is configured to: determine an (i+1)-th plan for processing the to-be-processed task based on the to-be-processed task, the tool description information, and execution results corresponding to respective ones of the first i plans; and executing the (i+1)-th plan to obtain an execution result corresponding to the (i+1)-th plan; wherein i is initially 1, and i is a positive integer greater than or equal to 1;
when the to-be-processed task is determined not to have been completed based on execution results corresponding to respective ones of the first i+1 plans, updating i to i+1, and repeating execution of the first operation; and
when the to-be-processed task is determined to have been completed based on the execution results corresponding to respective ones of the first i+1 plans, determining the second response information based on the execution results corresponding to respective ones of the first i+1 plans.

6. The method according to claim 5, wherein the determining the (i+1)-th plan for processing the to-be-processed task based on the to-be-processed task, the tool description information, and the execution results corresponding to respective ones of the first i plans comprises:
generating an (i+1)-th candidate plan set based on the to-be-processed task, the tool description information, and the execution results corresponding to respective ones of the first i plans, wherein the (i+1)-th candidate plan set comprises one or more candidate plans;
determining scores for the one or more candidate plans in the (i+1)-th candidate plan set based on candidate plan evaluation parameters; and
determining the (i+1)-th plan in the (i+1)-th candidate plan set based on the scores of the one or more candidate plans in the (i+1)-th candidate plan set.

7. The method according to claim 5 or 6, wherein the executing the (i+1)-th plan to obtain the execution result corresponding to the (i+1)-th plan comprises:
determining, based on the (i+1)-th plan, the tool description information, the to-be-processed task, and the execution results corresponding to respective ones of the first i plans, a target tool for executing the (i+1)-th plan and input parameters of the target tool; and
executing the (i+1)-th plan based on the target tool and the input parameters of the target tool to obtain the execution result corresponding to the (i+1)-th plan.

8. The method according to claim 6, wherein the determining the second response information based on the execution results corresponding to respective ones of the first i+1 plans comprises:
executing a second operation, wherein the second operation is configured to determine, based on the to-be-processed task and an execution result corresponding to a target plan, whether the target plan meets quality requirements, the target plan initially comprises the first i+1 plans, and the execution result corresponding to the target plan initially comprises the execution results corresponding to respective ones of the first i+1 plans; and
when the target plan meets the quality requirements, determining the second response information based on the execution result corresponding to the target plan.

9. The method according to claim 8, wherein the method further comprises:
when the target plan does not meet the quality requirements, updating the target plan to obtain an updated target plan; and
repeating execution of the second operation based on the execution result corresponding to the updated target plan.

10. The method according to claim 9, wherein the updating the target plan to obtain the updated target plan comprises:
determining a candidate plan set corresponding to a j-th plan in candidate plan sets corresponding to the first i+1 plans, wherein j is a positive integer less than or equal to i+1;
when the candidate plan set corresponding to the j-th plan comprises unexecuted candidate plans, determining a target candidate plan in the unexecuted candidate plans based on scores of the unexecuted candidate plans; and
updating the target plan based on the target candidate plan to obtain the updated target plan.

11. The method according to claim 1, wherein the determining, based on the to-be-processed task and tool description information, the initial plan for processing the to-be-processed task comprises:
generating a candidate node set of a first level in a tree of thought through tree-of-thought technology and based on the to-be-processed task and the tool description information, wherein each candidate node in the candidate node set of the first level corresponds to a candidate plan;
determining scores for the candidate nodes in the candidate node set of the first level based on candidate plan evaluation parameters; and
determining a target node at the first level in the candidate node set of the first level based on the scores of the candidate nodes in the candidate node set of the first level, and determining the candidate plan corresponding to the target node at the first level as the initial plan.

12. The method according to claim 1 or 10, wherein the determining the response information for the to-be-processed task based on the execution result corresponding to the initial plan comprises:
determining, through tool agent technology and based on the execution result corresponding to the initial plan, whether the to-be-processed task has been completed;
when the to-be-processed task is determined to have been completed, determining the first response information through determination technology and based on the to-be-processed task and the execution result corresponding to the initial plan; and
when the to-be-processed task is determined not to have been completed, determining second response information through tree-of-thought technology and the tool agent technology and based on the to-be-processed task, the tool description information, and the execution result corresponding to the initial plan.

13. The method according to claim 12, wherein the determining the second response information through the tree-of-thought technology and the tool agent technology and based on the to-be-processed task, the tool description information, and the execution result corresponding to the initial plan comprises:
executing a third operation, wherein the third operation is configured to: determine an (i+1)-th plan for processing the to-be-processed task through the tree-of-thought technology and based on the to-be-processed task, the tool description information, and execution results corresponding to respective ones of the first i plans; and execute the (i+1)-th plan through the tool agent technology to obtain an execution result corresponding to the (i+1)-th plan; wherein i is initially 1, and i is a positive integer greater than or equal to 1;
when it is determined through the tool agent technology and based on execution results corresponding to respective ones of the first i+1 plans that the to-be-processed task has not been completed, updating i to i+1, and repeating execution of the third operation; and
when it is determined through the tool agent technology and based on execution results corresponding to respective ones of the first i+1 plans that the to-be-processed task has been completed, determining the second response information through determination technology and based on the execution results corresponding to respective ones of the first i+1 plans.

14. The method according to claim 13, wherein the determining the (i+1)-th plan for processing the to-be-processed task through the tree-of-thought technology and based on the to-be-processed task, the tool description information, and the execution results corresponding to respective ones of the first i plans comprises:
generating a candidate node set of an (i+1)-th level through the tree-of-thought technology and based on the to-be-processed task, the tool description information, and the execution results corresponding to respective ones of the first i plans, wherein each candidate node in the candidate node set of the (i+1)-th level corresponds to a candidate plan;
determining scores for the candidate nodes in the candidate node set of the (i+1)-th level based on candidate plan evaluation parameters; and
determining a target node at the (i+1)-th level in the candidate node set of the (i+1)-th level based on the scores of the candidate nodes in the candidate node set of the (i+1)-th level, and determining the candidate plan corresponding to the target node at the (i+1)-th level as the (i+1)-th plan.

15. The method according to claim 13 or 14, wherein the executing the (i+1)-th plan through the tool agent technology to obtain the execution result corresponding to the (i+1)-th plan comprises:
determining, through the tool agent technology and based on the (i+1)-th plan, the tool description information, the to-be-processed task, and the execution results corresponding to respective ones of the first i plans, a target tool for executing the (i+1)-th plan and input parameters of the target tool; and
executing the (i+1)-th plan through the tool agent technology and based on the target tool and the input parameters of the target tool to obtain the execution result corresponding to the (i+1)-th plan.

16. The method according to claim 13 or 14, wherein the determining the second response information through the determination technology and based on the execution results corresponding to respective ones of the first i+1 plans comprises:
executing a fourth operation, wherein the fourth operation comprises determining, through the determination technology and based on the to-be-processed task and an execution result corresponding to a target plan, whether the target plan meets quality requirements, the target plan initially comprises the first i+1 plans, and the execution result corresponding to the target plan initially comprises the execution results corresponding to respective ones of the first i+1 plans; and
when the target plan meets the quality requirements, determining the second response information based on the execution result corresponding to the target plan.

17. The method according to claim 16, wherein the method further comprises:
when the target plan does not meet the quality requirements, updating the target plan through the tree-of-thought technology to obtain an updated target plan; and
repeating execution of the fourth operation through the determination technology and based on the execution result corresponding to the updated target plan.

18. A task processing apparatus comprising:
a receiving unit configured to receive an input to-be-processed task;
a first processing unit configured to determine, based on the to-be-processed task and tool description information, an initial plan for processing the to-be-processed task, wherein the initial plan comprises an initial step for processing the to-be-processed task and tools required for the initial plan;
an execution unit configured to execute the initial plan based on the initial step and the tools required for the initial plan to obtain an execution result corresponding to the initial plan; and
a second processing unit configured to determine response information for the to-be-processed task based on the execution result corresponding to the initial plan.

19. A task processing device, comprising at least one processor and a memory; wherein
the memory stores computer executable instructions; and
the at least one processor executes the computer executable instructions stored in the memory, causing the at least one processor to execute the task processing method of any one of claims 1 to 17.

20. A computer-readable storage medium, wherein computer executable instructions are stored in the computer-readable storage medium, and the computer executable instructions, when executed by a controller, are configured to implement the task processing method of any one of claims 1 to 17.
